# EUROPEAN PATENT SPECIFICATION

(11) **EP 3 860 061 B1**
(45) Date of publication and mention of the grant of the patent: **29.05.2024**
(21) Application number: 19876662.8
(22) Date of filing: 25.10.2019
(51) Int. Cl.: H04W 28/02, H04W 40/04, H04W 40/22, H04B 7/155

(54) **TRANSMISSION CONTROL METHOD AND DEVICE**
ÜBERTRAGUNGSSTEUERUNGSVERFAHREN UND -VORRICHTUNG
PROCÉDÉ ET DISPOSITIF DE COMMANDE DE TRANSMISSION

(30) Priority: 25.10.2018 CN 201811249705
(43) Date of publication of application: 04.08.2021
(73) Proprietor: Huawei Technologies Co., Ltd., Shenzhen, Guangdong 518129 (CN)
(72) Inventor: ZHUO, Yibin, Shenzhen, Guangdong 518129, (CN); ZHU, Yuanping, Shenzhen, Guangdong 518129, (CN); DAI, Mingzeng, Shenzhen, Guangdong 518129, (CN)
(74) Representative: MERH-IP Matias Erny Reichl Hoffmann Patentanwälte PartG mbB
(86) International application number: PCT/CN2019/113239
(87) International publication number: WO 2020/083365

(56) References cited:
- WO-A1-2018/175817
- HUAWEI: "Some considerations about congestion handling and flow control for IAB networks", 3GPP DRAFT; R2-1812711 SOME CONSIDERATIONS ABOUT CONGESTION HANDLING AND FLOW CONTROL FOR IAB NETWORKS, 3RD GENERATION PARTNERSHIP PROJECT (3GPP), MOBILE COMPETENCE CENTRE ; 650, ROUTE DES LUCIOLES ; , vol. RAN WG2, no. Gothenburg, Sweden; 20180820 - 20180824 10 August 2018 (2018-08-10), XP051522305, Retrieved from the Internet: URL:http://www.3gpp.org/ftp/tsg%5Fran/WG2% 5FRL2/TSGR2%5F103/Docs/R2%2D1812711%2Ezip [retrieved on 2018-08-10]
- CATT: "Consideration of flow control", 3GPP DRAFT; R2-1813710_FLOW CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chengdu, China; 28 September 2018 (2018-09-28), XP051523205, Retrieved from the Internet: URL:http://www.3gpp.org/ftp/tsg%5Fran/WG2% 5FRL2/TSGR2%5F103bis/Docs/R2%2D1813710%2Ez ip [retrieved on 2018-09-28]
- INTEL CORPORATION: "IAB flow control", 3GPP DRAFT; R3-185685-IAB-FLOWCONTROL-V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Chengdu, China; 20181008 - 20181012 29 September 2018 (2018-09-29), XP051528958, Retrieved from the Internet: URL:http://www.3gpp.org/ftp/tsg%5Fran/WG3% 5FIu/TSGR3%5F101bis/Docs/R3%2D185685%2Ezip [retrieved on 2018-09-29]

## Description

### TECHNICAL FIELD

This application relates to the field of communications technologies, and in particular, to a communication control method and an apparatus.

### BACKGROUND

With development of communications technologies, a relay networking technology is widely used and developed. A relay networking architecture is provided in the relay networking technology. The relay networking architecture includes a donor base station (donor gNodeB, DgNB), one or more relay nodes, and one or more terminal devices. The relay node is directly connected to the donor base station or indirectly connected to the donor base station through another relay node, and the terminal device is connected to the donor base station or the relay node through a wireless air interface. There is a clear hierarchical relationship in the relay networking architecture. Each relay node considers, as a parent node, a node that provides a backhaul service for the relay node. The relay networking architecture includes a multi-level hierarchical relationship, and each level may be referred to as each hop.

In the current technology, in the relay networking architecture, when congestion occurs on a downlink on a hop, congestion occurs in data in a downlink buffer of a downlink sending node. Consequently, the terminal device cannot receive data in time.

How to prevent a data loss or a data receiving latency is a problem that needs to be resolved.
Document WO 2018/175817 A1 generally discloses an apparatus of a user equipment (UE) comprising one or more baseband processors to generate a first set of one or more radio resource control (RRC) messages to create a packet data convergence protocol (PDCP) and RRC entity at a donor Fifth Generation evolved NodeB (DgNB), and to generate a second set of one or more RRC messages to create a radio link control (RLC) entity at a serving relay node (RN) to couple with the DgNB in a multi-hop relay network, and a memory to store the first set of one or more RRC messages or the second set of one or more RRC messages.
Document HUAWEI, "Some considerations about congestion handling and flow control for IAB networks", vol. RAN WG2, no. Gothenburg, Sweden; 20180820 - 20180824, 20180810, 3GPP DRAFT; R2-1812711 generally discusses some considerations about congestion handling and flow control for IAB networks.
Document CATT, "Consideration of flow control", vol. RAN WG2, no. Chengdu, China; 20180928, 3GPP DRAFT; R2-1813710_FLOW CONTROL generally discusses the DL congestion control issue and provides some high level solutions for DL flow control.

### SUMMARY

This application provides a communication control method and an apparatus, to learn of congestion on a link, thereby preventing a data loss or a data receiving latency. Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide communication control methods, a communication apparatus, a computer program product as well as a computer-readable storage medium.

According to a first aspect, this application provides a communication control method, including:
generating, by a first radio access network device, a first message; and
sending, by the first radio access network device, the first message to a second radio access network device, where the first message includes at least one reporting granularity and downlink status information corresponding to each of the at least one reporting granularity, where
the first radio access network device is a relay node in a wireless relay communications system, and the second radio access network device is a parent node of the first radio access network device or a donor base station of the first radio access network device in the wireless relay communications system.

The first radio access network device feeds back the downlink status information to the second radio access network device, so that the parent node of the first radio access network device or the donor base station can learn of downlink buffer status information of the first radio access network device in time, to learn of a downlink buffer congestion status. In this way, the parent node of the first radio access network device or the donor base station can control and process a downlink in time, and complete flow control processing in an IAB scenario. In this way, downlink congestion caused by a factor such as link interruption is effectively avoided, a packet loss and a latency of downlink data can be avoided, and it is ensured that a terminal device receives the data in time.

The reporting granularity is one or more of the following: one terminal device, one bearer service of one terminal device, one relay node, and one bearer service of one relay node; and the relay node is the radio access network device that sends the first message, or a child node of the radio access network device that sends the first message, or a radio access network device accessed by the terminal device. Because overheads of different reporting granularities are different, the first radio access network device can determine, based on a size of a resource allocated to the first message, a reporting granularity that can be used.

The downlink status information includes at least one status value, or an index value of each of at least one status value;
the status value is any one of the following: a remaining downlink buffer size, a downlink buffer occupancy ratio, an expected downlink communication rate, a congestion level, a downlink buffer status difference, and a downlink buffer size combination; and
the downlink buffer status difference is a difference between the status value and a status value reported by the first radio access network device last time, and the downlink buffer size combination includes a total downlink buffer size and a current downlink buffer size.

When the downlink status information includes the index value of each of the at least one status value,
the first message further includes first indication information, and the first indication information is used to indicate a mapping relationship between the index value and the status value; or the method further includes: sending, by the first radio access network device, first indication information to the second radio access network device, and the first indication information is used to indicate a mapping relationship between the index value and the status value. The mapping relationship is provided to indicate a correspondence between the status value and the index value.

The method further includes:
receiving, by the first radio access network device, a second message sent by the second radio access network device, where the second message includes a reporting manner and/or the at least one reporting granularity.

When the second radio access network device is the donor base station, the second message is any one of the following: a radio resource control (RRC) message, an F1 interface message, and an adaptation layer message.

When the second radio access network device is the parent node of the first radio access network device, the second message is a MAC CE message or an adaptation layer message.

The reporting manner is one or more of the following: a value represented by the downlink status information is greater than a first preset threshold; the value represented by the downlink status information is less than a second preset threshold; and a preset time point; and
the preset time point is capable of being adjusted when the value represented by the downlink status information satisfies a preset condition.

When the second radio access network device is the donor base station, the first message is any one of the following: a radio resource control (RRC) message, an F1 interface message, and an adaptation layer message.

When the second radio access network device is the parent node of the first radio access network device, the first message is a MAC CE message or an adaptation layer message.

The reporting granularity is a reporting granularity identifier; and
all reporting granularity identifiers and downlink status information corresponding to the reporting granularity identifiers in the first message are sequentially arranged, and each reporting granularity identifier is adjacent to the downlink status information corresponding to the reporting granularity identifier; or after the at least one reporting granularity identifier in the first message is sequentially arranged, all pieces of downlink status information are sequentially arranged.

When the first message is a MAC CE message, the sending, by the first radio access network device, the first message to a second radio access network device includes:
sending, by the first radio access network device, the first message to the second radio access network device in a preset logical channel prioritization order, where the preset logical channel prioritization order is used to indicate a prioritization sequence of logical channel of a MAC CE corresponding to the first message and another logical channel. The first message may be sent to the second radio access network device in the prioritization sequence specified based on the logical channel prioritization order, to ensure that the first message can be sent in time.

The method further includes:
determining, by the first radio access network device based on at least one of a routing management type, a buffer management type, and a size of a communication resource allocated by the first radio access network device to the first message, the reporting granularity corresponding to the first message.

The method further includes:
receiving, by the first radio access network device, second indication information sent by the second radio access network device, where the second indication information is used to indicate the first radio access network device to switch a link. In this way, the downlink congestion is reduced, and the packet loss and the latency of the downlink data can be avoided.

According to a second aspect, this application provides a communication control method, including:
receiving, by a second radio access network device, a first message sent by a first radio access network device, where the first message includes at least one reporting granularity and downlink status information corresponding to each of the at least one reporting granularity, where
the first radio access network device is a relay node in a wireless relay communications system, and the second radio access network device is a parent node of the first radio access network device or a donor base station of the first radio access network device in the wireless relay communications system.

The first radio access network device feeds back the downlink status information to the second radio access network device, so that the parent node of the first radio access network device or the donor base station can learn of downlink buffer status information of the first radio access network device in time, to learn of a downlink buffer congestion status. In this way, the parent node of the first radio access network device or the donor base station can control and process a downlink in time, and complete flow control processing in an IAB scenario. In this way, downlink congestion caused by a factor such as link interruption is effectively avoided, a packet loss and a latency of downlink data can be avoided, and it is ensured that a terminal device receives the data in time.

The reporting granularity is one or more of the following: one terminal device, one bearer service of one terminal device, one relay node, and one bearer service of one relay node; and
the relay node is the radio access network device that sends the first message, or a child node of the radio access network device that sends the first message, or a radio access network device accessed by the terminal device.

The downlink status information includes at least one status value, or an index value of each of at least one status value;
the status value is any one of the following: a remaining downlink buffer size, a downlink buffer occupancy ratio, an expected downlink communication rate, a congestion level, a downlink buffer status difference, and a downlink buffer size combination; and
the downlink buffer status difference is a difference between the status value and a status value reported by the first radio access network device last time, and the downlink buffer size combination includes a total downlink buffer size and a current downlink buffer size.

When the downlink status information includes the index value of each of the at least one status value,
the first message further includes first indication information, and the first indication information is used to indicate a mapping relationship between the index value and the status value; or the method further includes: receiving, by the second radio access network device, first indication information sent by the first radio access network device, and the first indication information is used to indicate a mapping relationship between the index value and the status value.

The method further includes:
sending, by the second radio access network device, a second message to the first radio access network device, where the second message includes a reporting manner and/or the at least one reporting granularity.

When the second radio access network device is the donor base station, the second message is any one of the following: a radio resource control (RRC) message, an F1 interface message, and an adaptation layer message.

When the second radio access network device is the parent node of the first radio access network device, the second message is a MAC CE message or an adaptation layer message.

The reporting manner is one or more of the following: a value represented by the downlink status information is greater than a first preset threshold; the value represented by the downlink status information is less than a second preset threshold; and a preset time point; and
the preset time point is capable of being adjusted when the value represented by the downlink status information satisfies a preset condition.

When the second radio access network device is the donor base station, the first message is any one of the following: a radio resource control (RRC) message, an F1 interface message, and an adaptation layer message.

When the second radio access network device is the parent node of the first radio access network device, the first message is a MAC CE message or an adaptation layer message.

The reporting granularity is a reporting granularity identifier; and
all reporting granularity identifiers and downlink status information corresponding to the reporting granularity identifiers in the first message are sequentially arranged, and each reporting granularity identifier is adjacent to the downlink status information corresponding to the reporting granularity identifier; or after the at least one reporting granularity identifier in the first message is sequentially arranged, all pieces of downlink status information are sequentially arranged.

The method further includes:
sending, by the second radio access network device, second indication information to the first radio access network device, where the second indication information is used to indicate the first radio access network device to switch a link; or
reducing, by the second radio access network device, a communication rate of a downlink transmission to the first radio access network device; or
allocating, by the second radio access network device, a time-frequency resource to the first radio access network device.

According to a third aspect, this application provides a communications apparatus, used in a first radio access network device and including:
a processing unit, configured to generate a first message; and
a sending unit, configured to send the first message to a second radio access network device, where the first message includes at least one reporting granularity and downlink status information corresponding to each of the at least one reporting granularity, where
the first radio access network device is a relay node in a wireless relay communications system, and the second radio access network device is a parent node of the first radio access network device or a donor base station of the first radio access network device in the wireless relay communications system.

The first radio access network device feeds back the downlink status information to the second radio access network device, so that the parent node of the first radio access network device or the donor base station can learn of downlink buffer status information of the first radio access network device in time, to learn of a downlink buffer congestion status. In this way, the parent node of the first radio access network device or the donor base station can control and process a downlink in time, and complete flow control processing in an IAB scenario. In this way, downlink congestion caused by a factor such as link interruption is effectively avoided, a packet loss and a latency of downlink data can be avoided, and it is ensured that a terminal device receives the data in time.

The reporting granularity is one or more of the following: one terminal device, one bearer service of one terminal device, one relay node, and one bearer service of one relay node; and
the relay node is the radio access network device that sends the first message, or a child node of the radio access network device that sends the first message, or a radio access network device accessed by the terminal device.

The downlink status information includes at least one status value, or an index value of each of at least one status value;
the status value is any one of the following: a remaining downlink buffer size, a downlink buffer occupancy ratio, an expected downlink communication rate, a congestion level, a downlink buffer status difference, and a downlink buffer size combination; and
the downlink buffer status difference is a difference between the status value and a status value reported by the first radio access network device last time, and the downlink buffer size combination includes a total downlink buffer size and a current downlink buffer size.

When the downlink status information includes the index value of each of the at least one status value,
the first message further includes first indication information, and the first indication information is used to indicate a mapping relationship between the index value and the status value; or the sending unit is further configured to send first indication information to the second radio access network device.

The apparatus further includes:
a receiving unit, configured to receive a second message sent by the second radio access network device, where the second message includes a reporting manner and/or the at least one reporting granularity.

When the second radio access network device is the donor base station, the second message is any one of the following: a radio resource control (RRC) message, an F1 interface message, and an adaptation layer message.

When the second radio access network device is the parent node of the first radio access network device, the second message is a MAC CE message or an adaptation layer message.

The reporting manner is one or more of the following: a value represented by the downlink status information is greater than a first preset threshold; the value represented by the downlink status information is less than a second preset threshold; and a preset time point; and
the preset time point is capable of being adjusted when the value represented by the downlink status information satisfies a preset condition.

In an optional implementation, when the second radio access network device is the donor base station, the first message is any one of the following: a radio resource control (RRC) message, an F1 interface message, and an adaptation layer message.

When the second radio access network device is the parent node of the first radio access network device, the first message is a MAC CE message or an adaptation layer message.

The reporting granularity is a reporting granularity identifier; and
all reporting granularity identifiers and downlink status information corresponding to the reporting granularity identifiers in the first message are sequentially arranged, and each reporting granularity identifier is adjacent to the downlink status information corresponding to the reporting granularity identifier; or after the at least one reporting granularity identifier in the first message is sequentially arranged, all pieces of downlink status information are sequentially arranged.

When the first message is a MAC CE message, the sending unit is specifically configured to:
send the first message to the second radio access network device in a preset logical channel prioritization order, where the preset logical channel prioritization order is used to indicate a prioritization sequence of logical channel of a MAC CE corresponding to the first message and another logical channel.

The processing unit is further configured to:
determine, based on at least one of a routing management type, a buffer management type, and a size of a communication resource allocated by the first radio access network device to the first message, the reporting granularity corresponding to the first message.

The receiving unit is configured to:
receive second indication information sent by the second radio access network device, where the second indication information is used to indicate the first radio access network device to switch a link.

According to a fourth aspect, this application provides a communications apparatus, used in a second radio access network device and including:
a receiving unit, configured to receive a first message sent by a first radio access network device, where the first message includes at least one reporting granularity and downlink status information corresponding to each of the at least one reporting granularity, where
the first radio access network device is a relay node in a wireless relay communications system, and the second radio access network device is a parent node of the first radio access network device or a donor base station of the first radio access network device in the wireless relay communications system.

The first radio access network device feeds back the downlink status information to the second radio access network device, so that the parent node of the first radio access network device or the donor base station can learn of downlink buffer status information of the first radio access network device in time, to learn of a downlink buffer congestion status. In this way, the parent node of the first radio access network device or the donor base station can control and process a downlink in time, and complete flow control processing in an IAB scenario. In this way, downlink congestion caused by a factor such as link interruption is effectively avoided, a packet loss and a latency of downlink data can be avoided, and it is ensured that a terminal device receives the data in time.

The reporting granularity is one or more of the following: one terminal device, one bearer service of one terminal device, one relay node, and one bearer service of one relay node; and
the relay node is the radio access network device that sends the first message, or a child node of the radio access network device that sends the first message, or a radio access network device accessed by the terminal device.

The downlink status information includes at least one status value, or an index value of each of at least one status value;
the status value is any one of the following: a remaining downlink buffer size, a downlink buffer occupancy ratio, an expected downlink communication rate, a congestion level, a downlink buffer status difference, and a downlink buffer size combination; and
the downlink buffer status difference is a difference between the status value and a status value reported by the first radio access network device last time, and the downlink buffer size combination includes a total downlink buffer size and a current downlink buffer size.

When the downlink status information includes the index value of each of the at least one status value,
the first message further includes first indication information, and the first indication information is used to indicate a mapping relationship between the index value and the status value; or the receiving unit is further configured to receive first indication information sent by the first radio access network device.

The apparatus further includes:
a sending unit, configured to send a second message to the first radio access network device, where the second message includes a reporting manner and/or the at least one reporting granularity.

When the second radio access network device is the donor base station, the second message is any one of the following: a radio resource control (RRC) message, an F1 interface message, and an adaptation layer message.

When the second radio access network device is the parent node of the first radio access network device, the second message is a MAC CE message or an adaptation layer message.

The reporting manner is one or more of the following: a value represented by the downlink status information is greater than a first preset threshold; the value represented by the downlink status information is less than a second preset threshold; and a preset time point; and
the preset time point is capable of being adjusted when the value represented by the downlink status information satisfies a preset condition.

When the second radio access network device is the donor base station, the first message is any one of the following: a radio resource control (RRC) message, an F1 interface message, and an adaptation layer message.

When the second radio access network device is the parent node of the first radio access network device, the first message is a MAC CE message or an adaptation layer message.

The reporting granularity is a reporting granularity identifier; and
all reporting granularity identifiers and downlink status information corresponding to the reporting granularity identifiers in the first message are sequentially arranged, and each reporting granularity identifier is adjacent to the downlink status information corresponding to the reporting granularity identifier; or after the at least one reporting granularity identifier in the first message is sequentially arranged, all pieces of downlink status information are sequentially arranged.

The apparatus further includes:
the sending unit is configured to send second indication information to the first radio access network device, where the second indication information is used to indicate the first radio access network device to switch a link; or
the apparatus further includes a processing unit, configured to reduce a communication rate of a downlink transmission to the first radio access network device; or
the processing unit is configured to allocate a time-frequency resource to the first radio access network device.

According to a fifth unclaimed aspect, a communications apparatus is provided. The communications apparatus is used in a first radio access network device or a second radio access network device, and is configured to perform the method according to any possible implementation of any one of the foregoing aspects. For example, the apparatus includes a unit configured to perform the method according to any possible implementation of any one of the foregoing aspects.

According to a sixth unclaimed aspect, another communications apparatus is provided. The communications apparatus is used in a first radio access network device or a second radio access network device. The apparatus includes a transceiver, a memory, and a processor. The transceiver, the memory, and the processor communicate with each other through an internal connection path. The memory is configured to store an instruction. The processor is configured to execute the instruction stored in the memory, to control the transceiver to receive a signal, and control the transceiver to send a signal. In addition, when the processor executes the instruction stored in the memory, the communications apparatus is enabled to perform the method according to any possible implementation of any one of the foregoing aspects.

According to a seventh aspect, a computer program product is provided. The computer program product includes computer program code, and when the computer program code is run on a computer, the computer is enabled to perform the methods according to the foregoing aspects.

According to an eighth aspect, a computer-readable medium is provided. The computer-readable medium is configured to store a computer program, and the computer program includes an instruction used to perform the methods according to the foregoing aspects.

The invention is defined by the appended claims.

### BRIEF DESCRIPTION OF DRAWINGS

FIG. 1a is a schematic diagram of a communications system in which an embodiment of this application is used;
FIG. 1b is a schematic diagram of another communications system in which an embodiment of this application is used;
FIG. 1c is a schematic diagram of still another communications system in which an embodiment of this application is used;
FIG. 1d is a schematic diagram of yet another communications system in which an embodiment of this application is used;
FIG. 1e is a schematic diagram of still yet another communications system in which an embodiment of this application is used;
FIG. 1f is a schematic diagram of a further communications system in which an embodiment of this application is used;
FIG. 1g is a schematic diagram of a still further communications system in which an embodiment of this application is used;
FIG. 1h is a schematic diagram of a yet further communications system in which an embodiment of this application is used;
FIG. 2 is a schematic diagram of a still yet further communications system in which an embodiment of this application is used;
FIG. 3 is a schematic flowchart of a communication control method according to an embodiment of this application;
FIG. 4 is a schematic flowchart of another communication control method according to an embodiment of this application;
FIG. 5a is a first schematic structural diagram of a first message according to an embodiment of this application;
FIG. 5b is a second schematic structural diagram of a first message according to an embodiment of this application;
FIG. 5c is a third schematic structural diagram of a first message according to an embodiment of this application;
FIG. 6 is a diagram of a sequence of logical channels in a logical channel prioritization order according to an embodiment of this application;
FIG. 7 is a schematic flowchart of still another communication control method according to an embodiment of this application;
FIG. 8 shows a communications apparatus 800 used in a first radio access network device according to an embodiment of this application;
FIG. 9 shows a communications apparatus 900 used in a second radio access network device according to an embodiment of this application;
FIG. 10 shows a communications apparatus 1000 used in a first radio access network device according to an embodiment of this application; and
FIG. 11 shows a communications apparatus 1100 used in a second radio access network device according to an embodiment of this application.

### DESCRIPTION OF EMBODIMENTS

The following describes technical solutions in this application with reference to the accompanying drawings.

It should be understood that names of all nodes and messages in this application are merely names set for ease of description in this application, and may be different in an actual network. It should not be understood that the names of all the nodes and the messages are limited in this application, but any name that has a function the same as or similar to that of the node or the message used in this application is considered as a method or equivalent replacement in this application, and falls within the protection scope of this application. Details are not described below again.

Compared with a 4th generation mobile communications system, a 5th generation (5th-generation, 5G) mobile communications system imposes more stringent requirements on various network performance indicators in an all-round manner. For example, a capacity indicator is increased by 1000 times, a requirement for wider coverage is imposed, and a requirement for ultra-high reliability and an ultra-low latency is imposed. On the one hand, it is considered that high frequency carriers have rich frequency resources. Therefore, in a hotspot area, to satisfy a requirement for an ultra-high capacity in 5G, high frequency small cell-based networking becomes increasingly popular. High frequency carriers have a relatively poor propagation feature, are severely attenuated by obstacles, and have small coverage. Therefore, a large quantity of small cells need to be densely deployed. Correspondingly, it is costly to provide fiber backhaul for the large quantity of densely deployed small cells, and construction is difficult. Therefore, an economical and convenient backhaul solution is required. On the other hand, from the perspective of the requirement for wide coverage, it is difficult and costly to deploy optical fibers to provide network coverage in some remote areas. Therefore, a flexible and convenient access and backhaul solution is also required.

To further reduce deployment costs and improve deployment flexibility, an integrated access and backhaul (integrated access and backhaul, IAB) technology is introduced in 5G. A wireless communication solution is used in both an access link (access link, AL) and a backhaul link (backhaul link, BL) in the IAB technology, so that optical fiber deployment can be avoided.

In this application, a node that supports integrated access and backhaul is referred to as a wireless backhaul node, and the wireless backhaul node may also be referred to as a relay node (relay node, RN), an IAB node (IAB node), or a radio access network device. For ease of description, the IAB node is used as an example for description below. The IAB node may provide a radio access service for a terminal device. Service data of the terminal device is transmitted to a donor node through the IAB node via a wireless backhaul link. The donor node is also referred to as an IAB donor (IAB donor) or a donor base station (donor gNodeB, DgNB). For example, the donor base station may be an access network element having a complete base station function, or may be an access network element in a form in which a centralized unit (centralized unit, CU) and a distributed unit (distributed unit, DU) are separated. The donor base station is connected, through a wired link, to a core network element, for example, a 5G core network (5G core, 5GC), that serves the terminal device, and provides a wireless backhaul function for the IAB node. One IAB node may include functions of a DU and a mobile termination (mobile termination, MT). The function of the MT is mainly a function similar to that of a mobile terminal, and is terminated at a wireless interface layer of a Uu interface of a backhaul link of an IAB donor or another IAB node. The function of the DU is mainly providing an access function for a terminal device or a node served by the IAB node. In other words, the function of the DU is equivalent to a function of the Uu interface. For example, the DU may provide a wireless connection function for the terminal device or a next-hop IAB node.

In consideration of a service communication reliability requirement, an IAB node may be enabled to support multi-connectivity (multi-connectivity), to cope with an exception, such as interruption, blockage (blockage), or load fluctuation, that may occur on a backhaul link, thereby improving communication reliability assurance. The multi-connectivity may be specifically dual connectivity (dual connectivity, DC), or may be connectivity in which there are more than two connections. This is not limited in the embodiments of this application.

An IAB network supports multi-hop networking and multi-connectivity networking. Therefore, there may be a plurality of communication paths between a terminal device and a donor base station. On one path, there is a determined hierarchical relationship between IAB nodes, and between an IAB node and a donor base station serving the IAB node. In the embodiments of this application, each IAB node considers, as a parent node, a node providing a backhaul service for the IAB node. Correspondingly, the IAB node may be considered as a child node of the parent node of the IAB node. In other words, a parent node of one IAB node is a next-hop node of the IAB node on an uplink or a previous-hop node of the IAB node on a downlink, and a child node of one IAB node is a previous-hop node of the IAB node on an uplink or a next-hop node of the IAB node on a downlink.

For ease of description, basic terms used in this application are defined below.

Next-hop node (also referred to as a parent node) on an uplink: The term refers to a node that provides a wireless backhaul link resource.

Previous-hop node (also referred to as a child node) on an uplink: The term refers to a node that transmits data to a network by using a backhaul link resource, or receives data from a network by using a backhaul link resource. The network herein is a core network, or another network, such as the internet or a dedicated network, above an access network.

Access link: The access link is a wireless link used for communication between a terminal device and a node (for example, an IAB node, a donor node, a donor base station, or a donor DU) that provides an access service for the terminal device, and the access link includes an uplink communication link and a downlink communication link. Uplink communication on the access link is also referred to as uplink communication of the access link, and downlink communication on the access link is also referred to as downlink communication of the access link.

Backhaul link: The backhaul link is a wireless link used for communication between a node and a parent node of the node, and the backhaul link includes an uplink communication link and a downlink communication link. Uplink communication on the backhaul link is also referred to as uplink communication of the backhaul link, and downlink communication on the backhaul link is also referred to as downlink communication of the backhaul link. The node includes but is not limited to the foregoing IAB node.

Path (path): The path is a full-process route from a sending node to a receiving node, and the path includes at least one link (link). In this application, the link represents a connection between adjacent nodes.

F1 interface message: The F1 interface message refers to information about an interface between a CU and a DU. In an IAB scenario, a CU exists only in a donor base station, and a relay node is considered as a DU. The CU may send configuration information to the relay node by using information about an interface between the CU and the DU.

Adaptation layer message: The adaptation layer message refers to information carried at an adaptation layer. In an IAB protocol architecture, each DU has an adaptation layer, and information exchange between different IAB nodes may be implemented by carrying information at the adaptation layer.

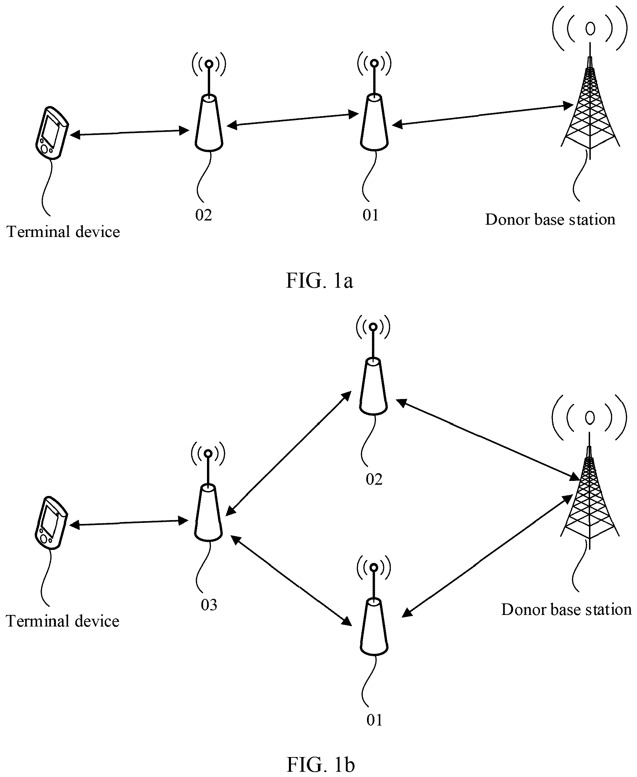

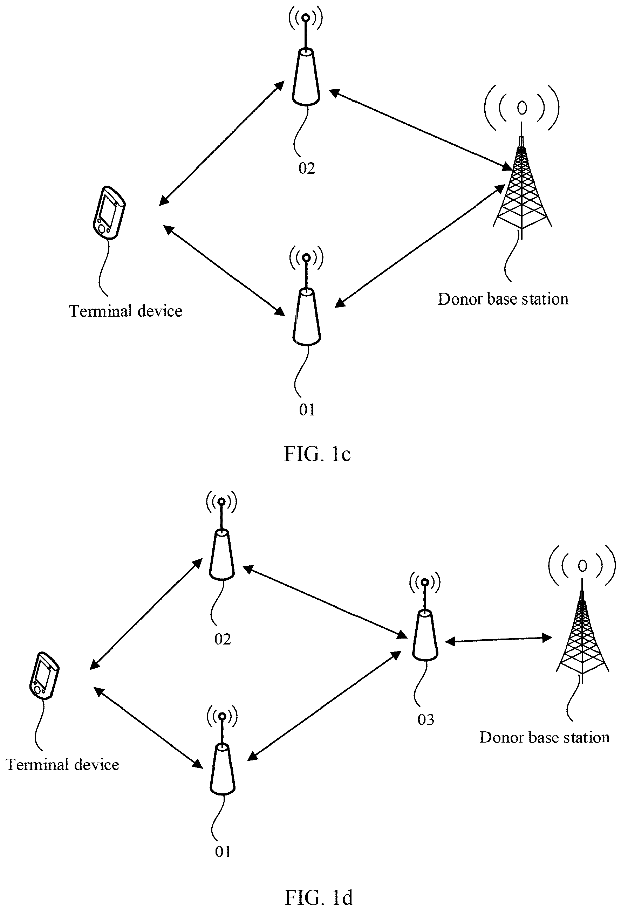

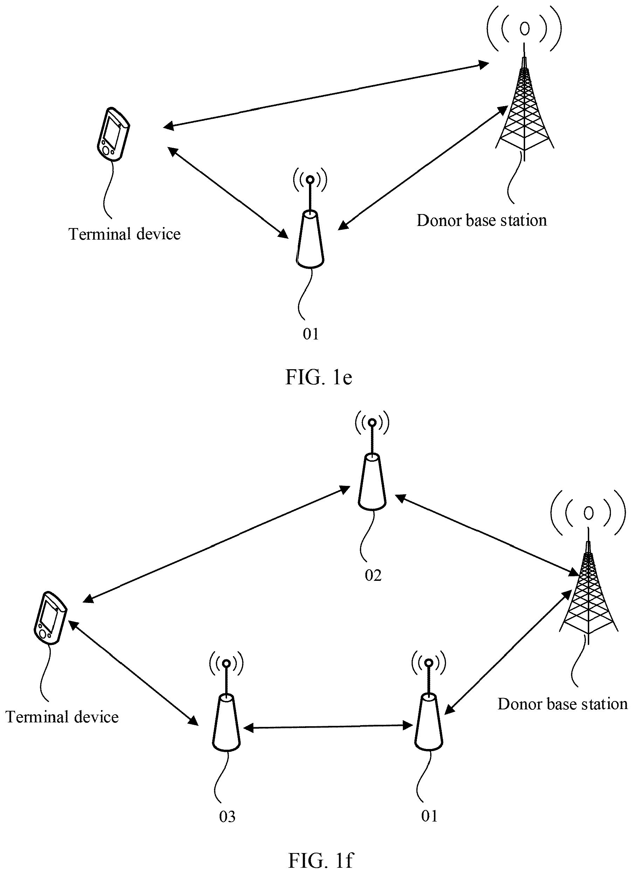

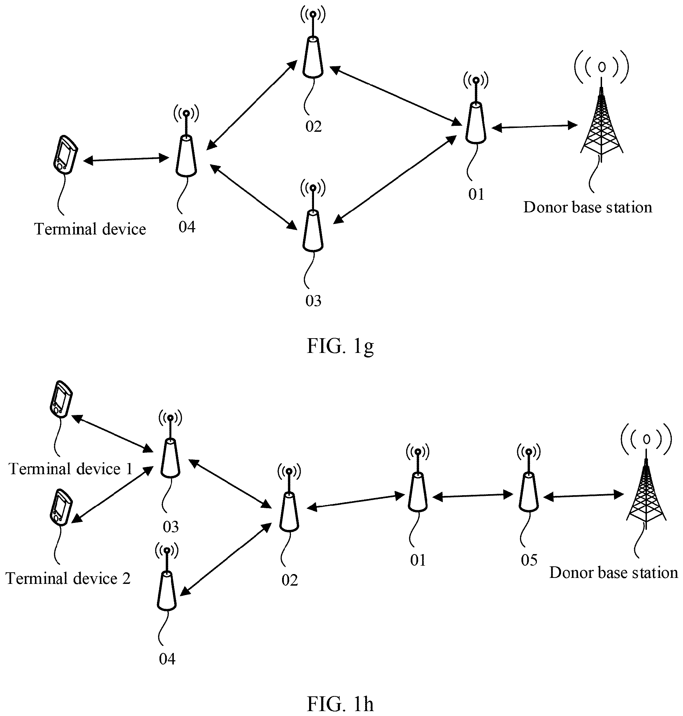

To better understand a data communication method and an apparatus that are used in a wireless backhaul network in the embodiments of this application, the following first describes a communications system in which the embodiments of this application are used. FIG. 1a is a schematic diagram of a communications system in which an embodiment of this application is used; FIG. 1b is a schematic diagram of another communications system in which an embodiment of this application is used; FIG. 1c is a schematic diagram of still another communications system in which an embodiment of this application is used; FIG. 1d is a schematic diagram of yet another communications system in which an embodiment of this application is used; FIG. 1e is a schematic diagram of still yet another communications system in which an embodiment of this application is used; FIG. 1f is a schematic diagram of a further communications system in which an embodiment of this application is used; FIG. 1g is a schematic diagram of a still further communications system in which an embodiment of this application is used; and FIG. 1h is a schematic diagram of a yet further communications system in which an embodiment of this application is used.

It should be noted that a communications system to which the embodiments of this application are applicable includes but is not limited to a narrowband internet of things (narrow band-internet of things, NB-IoT) system, a wireless local area network (wireless local access network, WLAN) system, an LTE system, a next-generation 5G mobile communications system, or a communications system after 5G, such as a new radio (new radio, NR) communications system or a device-to-device (device to device, D2D) communications system.

There is a clear hierarchical relationship between a radio access network device and a donor base station. Each radio access network device considers, as a parent node, a radio access network device that provides a backhaul service for the radio access network device.

As shown in FIG. 1a, the communications system shown in FIG. 1a is an IAB system. The IAB system includes a donor base station, an IAB node 01, an IAB node 02, and a terminal device served by the IAB node 02. A parent node of the IAB node 01 is the donor base station, and the IAB node 01 is also a parent node of the IAB node 02. In this application, the IAB node 01 is also referred to as a next-hop node of the IAB node 02 in an uplink direction. An uplink data packet of the terminal device served by the IAB node 02 is transmitted to the donor base station through the IAB node 02 and the IAB node 01 in sequence, and then the donor base station sends the uplink data packet to a mobile gateway device. For example, the donor base station sends an uplink data packet to a user plane function (user plane function, UPF) entity in a 5G network. After receiving a downlink data packet from the mobile gateway device, the donor base station sends the downlink data packet to the terminal device through the IAB node O1 and the IAB node 02 in sequence. In FIG. 1a, there is one available path for data communication between the terminal device and the donor base station: the terminal device ←→ the IAB node 02 ←→ the IAB node 01 ←→ the donor base station.

As shown in FIG. 1b, the communications system shown in FIG. 1b is another IAB system. The IAB system includes a donor base station, an IAB node 01, an IAB node 02, an IAB node 03, and a terminal device served by the IAB node 02 and the IAB node 03. A parent node of the IAB node 01 is the donor base station, and a parent node of the IAB node 02 is the donor base station. The IAB node 01 is a parent node of the IAB node 03, and the IAB node 02 is a parent node of the IAB node 03. Therefore, the IAB node 03 has two parent nodes. In other words, the IAB node 03 includes two next-hop nodes on an uplink, and an uplink data packet that needs to be sent through the IAB node 03 may be transmitted to the donor base station through two paths. In this application, the IAB node 01 is also referred to as a first next-hop node of the IAB node 03 in an uplink direction, and the IAB node 02 is also referred to as a second next-hop node of the IAB node 03 in the uplink direction. An uplink data packet of the terminal device may be transmitted to the donor base station through one or more IAB nodes, and then the donor base station sends the uplink data packet to a mobile gateway device. After receiving a downlink data packet from the mobile gateway device, the donor base station sends the downlink data packet to the terminal device through the IAB node. In FIG. 1b, there are two available paths for data communication between the terminal device and the donor base station: a path 1: the terminal device ←→ the IAB node 03 <--4 the IAB node 01 ←→ the donor base station, and a path 2: the terminal device ←→ the IAB node 03 <-- 4 the IAB node 02 <-- 4 the donor base station.

As shown in FIG. 1c, the communications system shown in FIG. 1c is still another IAB system. The IAB system includes a donor base station, an IAB node 01, an IAB node 02, and a terminal device served by the IAB node 01 and the IAB node 02. A parent node of the IAB node 01 is the donor base station, and a parent node of the IAB node 02 is the donor base station. An uplink data packet of the terminal device may be transmitted to the donor base station through one or more IAB nodes, and then the donor base station sends the uplink data packet to a mobile gateway device. After receiving a downlink data packet from the mobile gateway device, the donor base station sends the downlink data packet to the terminal device through the IAB node. In FIG. 1c, there are two available paths for data communication between the terminal device and the donor base station: a path 1: the terminal device ←→ the IAB node O1 ←→ the donor base station, and a path 2: the terminal device <-- 4 the IAB node 02 ←→ the donor base station.

As shown in FIG. 1d, the communications system shown in FIG. 1d is yet another IAB system. The IAB system includes a donor base station, an IAB node 01, an IAB node 02, an IAB node 03, and a terminal device served by the IAB node 01 and the IAB node 02. A parent node of the IAB node 03 is the donor base station. The IAB node 03 is a parent node of the IAB node 02, and the IAB node 03 is also a parent node of the IAB node 01. An uplink data packet of the terminal device may be transmitted to the donor base station through one or more IAB nodes, and then the donor base station sends the uplink data packet to a mobile gateway device. After receiving a downlink data packet from the mobile gateway device, the donor base station sends the downlink data packet to the terminal device through the IAB node. In FIG. 1d, there are two available paths for data communication between the terminal device and the donor base station: a path 1: the terminal device ←→ the IAB node 02 <--4 the IAB node 03 <--4 the donor base station, and a path 2: the terminal device ←→ the IAB node 01 <--4 the IAB node 03 <--4 the donor base station.

As shown in FIG. 1e, the communications system shown in FIG. 1e is still yet another IAB system. The IAB system includes a donor base station, an IAB node 01, and a terminal device served by the IAB node 01. A parent node of the IAB node 01 is the donor base station. An uplink data packet of the terminal device may be transmitted to the donor base station through one or more IAB nodes, and then the donor base station sends the uplink data packet to a mobile gateway device. After receiving a downlink data packet from the mobile gateway device, the donor base station sends the downlink data packet to the terminal device through the IAB node. In FIG. 1e, there are two available paths for data communication between the terminal device and the donor base station: a path 1: the terminal device ←→ the donor base station, and a path 2: the terminal device ←→ the IAB node 01 ←→ the donor base station.

As shown in FIG. 1f, the communications system shown in FIG. 1f is a further IAB system. The IAB system includes a donor base station, an IAB node 01, an IAB node 02, an IAB node 03, and a terminal device served by the IAB node 03 and the IAB node 02. A parent node of the IAB node 01 is the donor base station, and a parent node of the IAB node 02 is the donor base station. The IAB node 01 is a parent node of the IAB node 03. An uplink data packet of the terminal device may be transmitted to the donor base station through one or more IAB nodes, and then the donor base station sends the uplink data packet to a mobile gateway device. After receiving a downlink data packet from the mobile gateway device, the donor base station sends the downlink data packet to the terminal device through the IAB node. In FIG. 1f, there are two available paths for data communication between the terminal device and the donor base station: a path 1: the terminal device <--> the IAB node 02 ←→ the donor base station, and a path 2: the terminal device ←→ the IAB node 03 ←→ the IAB node 01 ←→ the donor base station.

As shown in FIG. 1g, the communications system shown in FIG. 1g is a still further IAB system. The IAB system includes a donor base station, an IAB node 01, an IAB node 02, an IAB node 03, an IAB node 04, and a terminal device served by the IAB node 04. A parent node of the IAB node 01 is the donor base station. The IAB node 01 is a parent node of the IAB node 02, and the IAB node 01 is also a parent node of the IAB node 03. The IAB node 02 is a parent node of the IAB node 04, and the IAB node 03 is a parent node of the IAB node 04. An uplink data packet of the terminal device may be transmitted to the donor base station through one or more IAB nodes, and then the donor base station sends the uplink data packet to a mobile gateway device. After receiving a downlink data packet from the mobile gateway device, the donor base station sends the downlink data packet to the terminal device through the IAB node. In FIG. 1g, there are two available paths for data communication between the terminal device and the donor base station: a path 1: the terminal device ←→ the IAB node 04 <-- 4 the IAB node 02 <-- 4 the IAB node 01 ←→ the donor base station, and a path 2: the terminal device ←→ the IAB node 04 <--4 the IAB node 03 ←→ the IAB node O1 <-- 4 the donor base station.

As shown in FIG. 1h, the communications system shown in FIG. 1h is a yet further IAB system. The IAB system includes a donor base station, an IAB node 01, an IAB node 02, an IAB node 03, an IAB node 04, an IAB node 05, and a terminal device 1 and a terminal device 2 that are served by the IAB node 04. A parent node of the IAB node 05 is the donor base station. The IAB node 05 is a parent node of the IAB node 01. The IAB node 01 is a parent node of the IAB node 02. The IAB node 02 is a parent node of the IAB node 03, and the IAB node 02 is also a parent node of the IAB node 04. An uplink data packet of the terminal device may be transmitted to the donor base station through one or more IAB nodes, and then the donor base station sends the uplink data packet to a mobile gateway device. After receiving a downlink data packet from the mobile gateway device, the donor base station sends the downlink data packet to the terminal device through the IAB node. In FIG. 1h, there is one available paths for data communication between the terminal device 1 and the donor base station: the terminal device 1 ←→ the IAB node 03 ←→ the IAB node 02 ←→ the IAB node 01 ←→ the IAB node 05 ←→ the donor base station. There is one available paths for data communication between the terminal device 2 and the donor base station: the terminal device 2 ←→ the IAB node 03 ←→ the IAB node 02 ←→ the IAB node 01 ←→ the IAB node 05 ←→ the donor base station.

The IAB systems shown in FIG. 1a to FIG. 1h are merely examples. In an IAB scenario in which multi-hop and multi-connectivity are combined, there are more other possibilities. For example, an IAB node of one donor node is connected to other donor node, to form dual connectivity to serve a terminal device. The possibilities are not listed one by one herein.

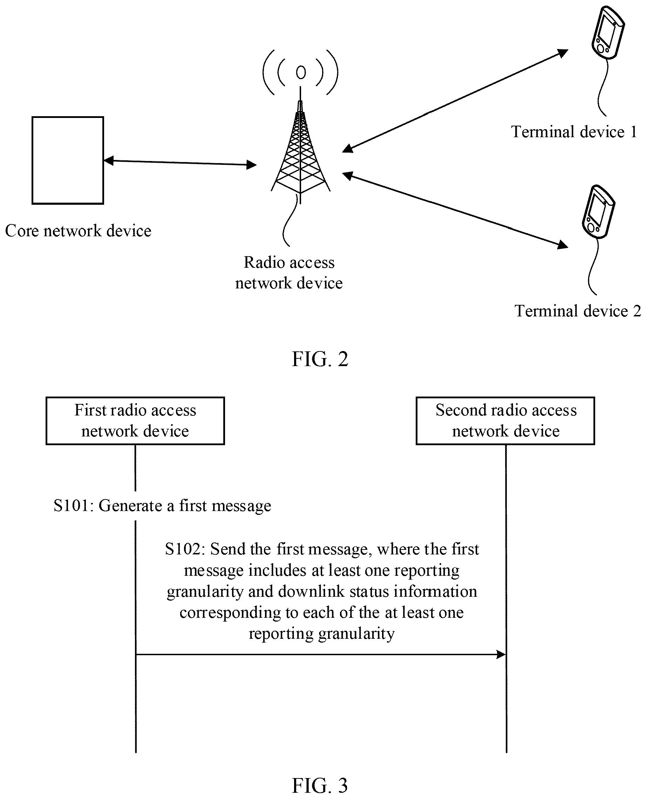

FIG. 2 is a schematic diagram of a still yet further communications system in which an embodiment of this application is used. As shown in FIG. 2, the communications system includes a core network device, a radio access network device, and at least one terminal device. In this application, the terminal device is connected to the radio access network device in a wireless manner, and the radio access network device is connected to the core network device in a wireless or wired manner. The core network device and the radio access network device may be different independent physical devices, or a function of the core network device and a logical function of the radio access network device may be integrated into a same physical device, or some functions of the core network device and some functions of the radio access network device may be integrated into one physical device. The terminal device may be located at a fixed position, or may be movable. FIG. 2 is merely a schematic diagram, and the communications system may further include another network device, for example, may further include a wireless relay device and a wireless backhaul device that are not drawn in FIG. 2. Quantities of core network devices, radio access network devices, and terminal devices included in the communications system are not limited in the embodiments of this application.

Each of the communications systems shown in FIG. 1a to FIG. 2 is also referred to as a wireless relay communications system.

It should be understood that the radio access network device is an access device used by the terminal device to access the wireless relay communications system in a wireless manner. The radio access network device may include but is not limited to a NodeB (NodeB), an evolved NodeB eNodeB, a base station in a 5G wireless relay communications system, a base station in a future wireless relay communications system, an access node in a wireless fidelity (wireless-fidelity, Wi-Fi) system, or the like. A specific technology and a specific device form used by the radio access network device are not limited in the embodiments of this application.

It should be understood that the terminal device may also be referred to as a terminal (Terminal), user equipment (user equipment, UE), a mobile station (mobile station, MS), a mobile terminal (mobile terminal, MT), or the like. The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

It should be understood that the radio access network device and the terminal device may be deployed on land, where the deployment includes indoor, outdoor, handheld, or vehicle-mounted deployment; or may be deployed on water; or may be deployed on an aircraft, a balloon, and a satellite in air. Application scenarios of the radio access network device and the terminal device are not limited in the embodiments of this application.

It should be understood that the embodiments of this application may be used in downlink signal communication, or may be used in uplink signal communication, or may be used in device-to-device (device to device, D2D) signal communication. For the downlink signal communication, a sending device is a radio access network device, and a corresponding receiving device is a terminal device. For the uplink signal communication, a sending device is a terminal device, and a corresponding receiving device is a radio access network device. For the D2D signal communication, a sending device is a terminal device, and a corresponding receiving device is also a terminal device. A signal communication direction is not limited in the embodiments of this application.

It should be understood that communication between the radio access network device and the terminal device and communication between terminal devices may be performed by using a licensed spectrum (licensed spectrum), an unlicensed spectrum (unlicensed spectrum), or both a licensed spectrum and an unlicensed spectrum. The communication between the radio access network device and the terminal device and the communication between the terminal devices may be performed by using a spectrum below six giga hertz (gigahertz, GHz), or may be performed by using a spectrum above 6 GHz, or may be performed by using both a spectrum below 6 GHz and a spectrum above 6 GHz. In this application, a spectrum resource used between the radio access network device and the terminal device is not limited.

Currently, in a downlink data communication process, downlink data communication of each hop is scheduled and completed by an IAB node, that is, a base station (or a DU) in each IAB node schedules an MT part of a child node, to implement downlink data communication. FIG. 1g is used as an example. A base station (or a DU) in the IAB node 01 schedules an MT in the IAB node 02 to perform downlink data communication, and a base station (or a DU) in the IAB node 02 schedules an MT in the IAB node 04 to perform downlink data communication. However, when congestion (congestion) or blockage (blockage) occurs in an IAB node of a hop in a downlink direction, a buffer (buffer) congestion problem occurs in a base station (or a DU) in the IAB node in the downlink direction, and a packet loss may occur in data. For example, when congestion occurs in a downlink direction between the IAB node 02 and the IAB node 04, the IAB node 01 cannot sense a downlink buffer status of the base station (or the DU) in the IAB node 02, and the IAB node 01 further continuously sends downlink data to the IAB node 02. Consequently, congestion occurs in a downlink buffer of the base station (or the DU) in the IAB node 02, and continuous congestion further causes a packet loss because data is discarded due to timeout.

Currently, in an uplink data communication process, uplink data communication of each hop is scheduled and completed by a parent node, that is, a base station (or a DU) in each IAB node schedules an MT part of a child node, to implement uplink data communication. FIG. 1g is used as an example. A base station (or a DU) in the IAB node 01 schedules an MT in the IAB node 02 to perform uplink data communication, and a base station (or a DU) in the IAB node 02 schedules an MT in the IAB node 04 to perform uplink data communication. However, when congestion (congestion) or blockage (blockage) occurs in an IAB node of a hop in an uplink direction, communication performance of a data packet on a corresponding routing path is affected, and in particular, latency performance is affected. For example, when congestion occurs in an uplink direction between the IAB node 02 and the IAB node 01, data is stacked in the IAB node 02. In this case, the IAB node 02 may reduce/stop uplink scheduling on the IAB node 04 to resolve the congestion problem of the IAB node 02; however, in this case, latency performance of an uplink data packet on a corresponding routing path is affected, and low latencies of some services having low-latency requirements cannot be satisfied.

Therefore, in the current technology, in a relay networking architecture, when congestion occurs on a link on a hop, a data packet loss occurs or a latency requirement of data cannot be satisfied. How to enable a node in a relay networking architecture to learn of congestion on a link, to prevent a problem that a data packet loss occurs or a data receiving latency requirement cannot be satisfied is a problem that needs to be resolved.

FIG. 3 is a schematic flowchart of a communication control method according to an embodiment of this application. The method may be used in the communications systems shown in FIG. 1a to FIG. 2. However, this embodiment of this application is not limited thereto. In this embodiment of this application, a wireless relay communications system includes a radio access network device and a donor base station, and the radio access network device has a plurality of next-hop nodes on a downlink.

S101: A first radio access network device generates a first message.

S102: The first radio access network device sends the first message to a second radio access network device, where the first message includes at least one reporting granularity and downlink status information corresponding to each of the at least one reporting granularity.

The first radio access network device is a relay node in the wireless relay communications system, and the second radio access network device is a parent node of the first radio access network device or the donor base station in the wireless relay communications system.

The reporting granularity is one or more of the following: one terminal device, one bearer service of one terminal device, one relay node, and one bearer service of one relay node; and the relay node is the radio access network device that sends the first message, or a child node of the radio access network device that sends the first message, or a radio access network device accessed by the terminal device.

The downlink status information includes at least one status value, or an index value of each of at least one status value; the status value is any one of the following: a remaining downlink buffer size, a downlink buffer occupancy ratio, an expected downlink communication rate, a congestion level, a downlink buffer status difference, and a downlink buffer size combination; and the downlink buffer status difference is a difference between the status value and a status value reported by the first radio access network device last time, and the downlink buffer size combination includes a total downlink buffer size and a current downlink buffer size.

For example, in the wireless relay communications system, the first radio access network device is a relay node in the wireless relay communications system, the second radio access network device is the donor base station in the wireless relay communications system, and the first radio access network device may be directly connected to the donor base station, or connected to the donor base station through one or more other relay nodes. In a communication process, the first radio access network device may generate the first message in real time, where the first message includes N reporting granularities and downlink status information corresponding to each of the N reporting granularities, and N is a positive integer greater than or equal to 1; and then the first radio access network device sends the generated first message to the second radio access network device serving as the donor base station.

Alternatively, in the wireless relay communications system, the first radio access network device and the second radio access network device are relay nodes in the wireless relay communications system, and the second radio access network device is the parent node of the first radio access network device. In a communication process, the first radio access network device may generate the first message in real time, where the first message includes N reporting granularities and downlink status information corresponding to each of the N reporting granularities, and N is a positive integer greater than or equal to 1; and then the first radio access network device sends the generated first message to the second radio access network device serving as the parent node.

The first radio access network device is in a congested state, or congestion will occur in the first radio access network device.

The downlink status information corresponding to each reporting granularity may be M status values, where M is a positive integer greater than or equal to 1. The first radio access network device may determine, as the status value, any one of the following: a remaining downlink buffer (buffer) size, a downlink buffer occupancy ratio, an expected downlink communication rate, a congestion level, a downlink buffer status difference, and a downlink buffer size combination. The expected downlink communication rate is an expected communication rate at which the second radio access network device receives data in a downlink direction, and may also be considered as a rate, expected by the second radio access network device, at which a parent node of the second radio access network device schedules downlink data communication. The congestion level is a level corresponding to a current data congestion degree of the first radio access network device. The downlink buffer status difference is a difference between a current status value and a status value reported by the first radio access network device last time. For example, the downlink buffer status difference is a difference between a current remaining downlink buffer size of the first radio access network device and a remaining downlink buffer size reported by the first radio access network device last time, or the downlink buffer status difference is a difference between a current downlink buffer size of the first radio access network device and a downlink buffer size reported by the first radio access network device last time. The downlink buffer size combination includes a total downlink buffer size of the first radio access network device and the current downlink buffer size of the first radio access network device.

In some embodiments, the first radio access network device needs to perform quantization processing on each status value, so that each status value may have an index value when the status value has different values. A mapping relationship between an index value and a corresponding status value is preconfigured in the first radio access network device, or the second radio access network device sends a mapping relationship between an index value and a corresponding status value to the first radio access network device. For example, a mapping relationship is configured/preconfigured for the remaining downlink buffer size. For example, a representation form of the mapping relationship may be a mapping table, and the mapping table includes different values of the remaining downlink buffer size and an index value corresponding to each value. A mapping relationship is configured/preconfigured for the downlink buffer occupancy ratio. For example, a representation form of the mapping relationship may be a mapping table, and the mapping table includes different values of the downlink buffer occupancy ratio and an index value corresponding to each value. A mapping relationship is configured/preconfigured for the downlink buffer status difference. For example, a representation form of the mapping relationship may be a mapping table, and the mapping table includes different values of the downlink buffer status difference and an index value corresponding to each value.

For example, a mapping table is configured/preconfigured for the remaining downlink buffer size. The mapping table includes different value intervals of the remaining downlink buffer size and an index value corresponding to each value interval. The index value may also be referred to as a quantized remaining downlink buffer size.

**Table 1 Mapping table of the remaining downlink buffer size**

| Remaining downlink buffer size | Quantized remaining downlink buffer size |
|---|---|
| 0 < Remaining size < A | 1 |
| A ≤ Remaining size < B | 2 |
| B ≤ Remaining size < C | 3 |
| ... | ... |

The reporting granularity may be any one or more of the following types: downlink status information of one terminal device, downlink status information of one bearer service of one terminal device, downlink status information of one relay node, and downlink status information of one bearer service of one relay node. The terminal device is a terminal device served by the radio access network device in the wireless relay communications system. The downlink status information may also be referred to as downlink buffer status information. The relay node may be the radio access network device that sends the first message; or the relay node may be a child node of the radio access network device that sends the first message; or the relay node may be a radio access network device accessed by a terminal device connected to the wireless relay communications system.

For example, when the reporting granularity is downlink status information of one terminal device, the first radio access network device sets a buffer for to-be-sent downlink data for each terminal device, and one piece of downlink status information is downlink status information of one terminal device connected to the first radio access network device, for example, downlink status information of a terminal device 1, and downlink status information of a terminal device 2. When the reporting granularity is downlink status information of one bearer service of one terminal device, because each terminal device usually has a plurality of bearer services, and each bearer service has a requirement for one service or a plurality of similar service requirements, if the first radio access network device sets a buffer for to-be-sent downlink data for each bearer service of each terminal device, one piece of downlink status information that is obtained is downlink status information of one bearer service of one terminal device connected to the first radio access network device, for example, downlink status information of a bearer service 1 of a terminal device 1, and downlink status information of a bearer service 1 of a terminal device 2. When the reporting granularity is downlink status information of one relay node, the first radio access network device sets a buffer for to-be-sent downlink data for each relay node, and one piece of downlink status information is downlink status information of one relay node in the first radio access network device, for example, downlink status information of a relay node 1, and downlink status information of a relay node 2. When the reporting granularity is downlink status information of one bearer service of one relay node, because each relay node usually has a plurality of bearer services, and each bearer service has a requirement for one service or a plurality of similar service requirements, if the first radio access network device sets a buffer for to-be-sent downlink data for each bearer service of each relay node, one piece of downlink status information that is obtained is downlink status information of one bearer service of one relay node in the first radio access network device, for example, downlink status information of a bearer service 1 of a relay node 1, and downlink status information of a bearer service 1 of a relay node 2.

For example, when the relay node in the reporting granularity is the radio access network device that sends the first message, one piece of downlink status information is downlink status information of the radio access network device that sends the first message. In this embodiment, one piece of downlink status information is the downlink status information of the first radio access network device. For example, in FIG. 1h, when congestion occurs in a downlink buffer of the relay node 01, it may be determined that congestion occurs in a downlink buffer between the relay node 01 and the relay node 02. In this case, downlink status information sent by the relay node 01 to the relay node 05 is downlink status information of the relay node 01. When the reporting granularity is downlink status information of one bearer service of one relay node, and the relay node in the reporting granularity is the radio access network device that sends the first message, one piece of downlink status information is downlink status information of one bearer service of the radio access network device that sends the first message. For example, in FIG. 1h, when congestion occurs in a downlink buffer of the relay node 01, it may be determined that congestion occurs in a downlink buffer between the relay node O1 and the relay node 02 and that congestion occurs due to a bearer service 1 of the relay node 01. In this case, downlink status information sent by the relay node 01 to the relay node 05 is downlink status information of a bearer service 1 of the relay node 01.

For example, when the relay node in the reporting granularity is a child node of the radio access network device that sends the first message, in this embodiment, one piece of downlink status information is downlink status information of the child node of the first radio access network device. For example, in FIG. 1h, congestion occurs in a downlink buffer of the relay node 02. For the relay node 02, the relay node 02 has two child nodes, namely, the relay node 03 and the relay node 04. In this case, it may be determined that congestion occurs in a downlink buffer between the relay node 02 and the relay node 03, and downlink status information sent by the relay node 02 to the relay node 01 is downlink status information corresponding to the relay node 03. When the reporting granularity is downlink status information of one bearer service of one relay node, and the relay node in the reporting granularity is a child node of the radio access network device that sends the first message, one piece of downlink status information is downlink status information of a bearer service of the child node of the radio access network device that sends the first message. For example, in FIG. 1h, congestion occurs in a downlink buffer of the relay node 02. For the relay node 02, the relay node 02 has two child nodes, namely, the relay node 03 and the relay node 04. In this case, it may be determined that congestion occurs in a downlink buffer between the relay node 02 and the relay node 03 and that congestion occurs due to a bearer service 1 of the relay node 03, and downlink status information sent by the relay node 02 to the relay node 01 is downlink status information corresponding to the bearer service 1 of the relay node 03.

For example, when the relay node in the reporting granularity is a radio access network device accessed by a terminal device connected to the wireless relay communications system, for example, in FIG. 1h, congestion occurs in a downlink buffer of the relay node 01, but for the relay node 01, the relay node 01 can only sense, based on target node information in a routing table, that data is sent to the access relay node 03. In this case, downlink status information reported by the relay node 01 to the relay node 05 is downlink status information corresponding to the relay node 03 and that is in the relay node 01. When the reporting granularity is downlink status information of one bearer service of one relay node, and the relay node in the reporting granularity is a radio access network device accessed by a terminal device connected to the wireless relay communications system, one piece of downlink status information is downlink status information of a bearer service of the radio access network device accessed by the terminal device connected to the wireless relay communications system. For example, in FIG. 1h, congestion occurs in a downlink buffer of the relay node 01. For the relay node 01, if it may be determined that congestion occurs in a downlink buffer corresponding to the relay node 03, and it is determined that congestion occurs due to a bearer service 1 of the relay node 03, downlink status information sent by the relay node 01 to the relay node 05 is downlink status information corresponding to the bearer service 1 of the relay node 03.

In this application, for example, the bearer service is a set of services having a specific quality of service (quality of service, QoS) attribute. For example, the bearer service is a bearer service of the packet data convergence protocol (packet data convergence protocol, PDCP), or the bearer service is a specific data flow, or the bearer service is one or more data packets (for example, a data flow of a slice) that belong to a flow, or the bearer service is communication corresponding to a logical channel at a radio link control (radio link control, RLC) layer. In addition, the bearer service may be identified by using a bearer service identifier, and bearer service identifiers may be different in different scenarios. For example, if the bearer service is a bearer service corresponding to the PDCP, for example, the bearer service is a data radio bearer (data radio bearer, DRB), the bearer service identifier is a bearer service identifier of the PDCP. If the bearer service is a service on a backhaul link channel (RLC backhaul channel, RLC) or an RLC bearer (RLC bearer) service, the bearer service identifier is an RLC channel (channel) identifier or an RLC bearer service identifier. If the bearer service is a service on a logical channel of a medium access control (medium access control, MAC) layer, the bearer service identifier is a logical channel identifier (logic channel identifier, LCID). The bearer service identifier is not specifically limited in this application.

In this embodiment, the first radio access network device sends the first message to the second radio access network device, where the first message includes the at least one reporting granularity and the downlink status information corresponding to each of the at least one reporting granularity, and the second radio access network device is the parent node of the first radio access network device or the donor base station in the wireless relay communications system. The first radio access network device feeds back the downlink status information to the second radio access network device, so that the parent node of the first radio access network device or the donor base station can learn of downlink buffer status information of the first radio access network device in time, to learn of a downlink buffer congestion status. In this way, the parent node of the first radio access network device or the donor base station can control and process a downlink in time, and complete flow control processing in an IAB scenario. In this way, downlink congestion caused by a factor such as link interruption is effectively avoided, a packet loss and a latency of downlink data can be avoided, and it is ensured that the terminal device receives the data in time.

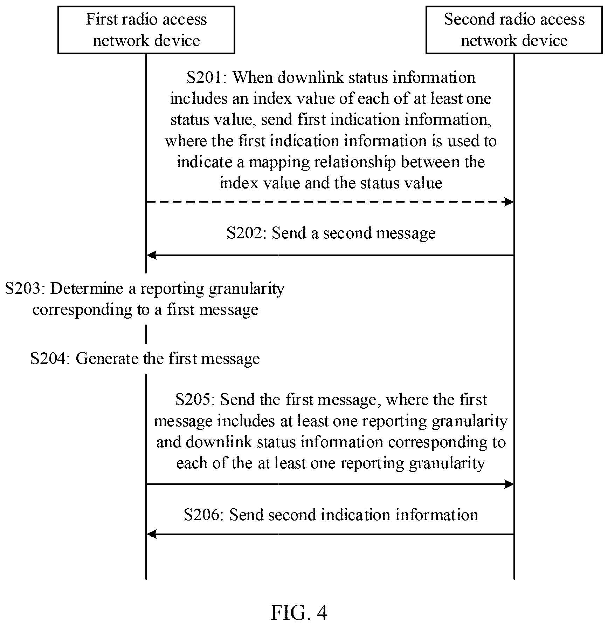

FIG. 4 is a schematic flowchart of another communication control method according to an embodiment of this application. The method may be used in the communications systems shown in FIG. 1a to FIG. 2. However, this embodiment of this application is not limited thereto. In this embodiment of this application, a wireless relay communications system includes a radio access network device and a donor base station, and the radio access network device has a plurality of next-hop nodes on a downlink.

S201: When downlink status information includes an index value of each of at least one status value, a first radio access network device sends first indication information to a second radio access network device, where the first indication information is used to indicate a mapping relationship between the index value and the status value. Alternatively, when downlink status information includes an index value of each of at least one status value, in step S204, a first message further includes first indication information.

For example, the first radio access network device may first send the first indication information to the second radio access network device, where the first indication information is used to indicate the mapping relationship between the index value and the status value. Alternatively, in step S204, the first message further includes the first indication information. Then, the second radio access network device may determine, based on the first indication information, a mapping relationship currently used by the first radio access network device. Further, in step S205, after the second radio access network device receives the first message, the second radio access network device may determine, based on the mapping relationship, the index value corresponding to the status value.

In this application, the mapping relationship may be one or more mapping tables. Because a backhaul link of a relay node carries a relatively large traffic volume, an existing mapping table of the TS 38.321 MAC protocol cannot satisfy a requirement of a scenario. In addition, on multi-hop links, traffic volumes of links with different hop counts differ greatly. Therefore, a plurality of mapping tables need to be defined to be used in scenarios of different traffic volumes. In this embodiment, a plurality of mapping tables may be added to record a mapping between an index value and a status value on backhaul links with different hop counts in a relay network, or only one mapping table is added to record a mapping between an index value and a status value in a backhaul link of a relay network. Because there are a plurality of mapping relationships between buffer size fields (buffer size field) and buffer size levels (buffer size levels) in a protocol, the first radio access network device may send the first indication information through the second radio access network device, where the first indication information is used to indicate the mapping relationship between the index value and the status value. For example, the first indication information is used to indicate that one of the plurality of mapping relationships is used between the index value and the status value.

For example, Table 2 is an example of the mapping table in this embodiment. Table 2 shows a mapping status between a 5-bit buffer size field and 32 buffer size levels. In Table 2, Index is an index value, and also represents the foregoing buffer size field; and BS value is a status value of a downlink status (buffer size, BS), and also represents the foregoing buffer size level. In addition, the buffer size field is not limited to five bits.

**Table 2 Example of the mapping table in this embodiment**

| Index | BS value | Index | BS value | Index | BS value | Index | BS value |
|---|---|---|---|---|---|---|---|
| 0 | 0 | 8 | ≤ T8 | 16 | ≤ T16 | 24 | ≤ T24 |
| 1 | ≤ T1 | 9 | ≤ T9 | 17 | ≤ T17 | 25 | ≤ T25 |
| 2 | ≤ T2 | 10 | ≤ T10 | 18 | ≤ T18 | 26 | ≤ T26 |
| 3 | ≤ T3 | 11 | ≤ T11 | 19 | ≤ T9 | 27 | ≤ T27 |
| 4 | ≤ T4 | 12 | ≤ T12 | 20 | ≤ T20 | 28 | ≤ T28 |
| 5 | ≤ T5 | 13 | ≤ T13 | 21 | ≤ T21 | 29 | ≤ T29 |
| 6 | ≤ T6 | 14 | ≤ T14 | 22 | ≤ T22 | 30 | ≤ T30 |
| 7 | ≤ T7 | 15 | ≤ T15 | 23 | ≤ T23 | 31 | > T30 |

This step may be performed before step S204. For example, this step may be performed before step S202, or may be performed after step S202, or may be performed after step 203.

S202: The second radio access network device sends a second message to the first radio access network device, where the second message includes a reporting manner and/or a reporting granularity. The first radio access network device is a relay node in the wireless relay communications system, and the second radio access network device is a parent node of the first radio access network device or the donor base station in the wireless relay communications system.

When the second radio access network device is the donor base station, the second message is any one of the following: a radio resource control (RRC) message, an F1 interface message, and an adaptation layer message.

When the second radio access network device is a parent node of the first radio access network device, the second message is a MAC CE message or an adaptation layer message.

The reporting manner is one or more of the following: a value represented by the downlink status information is greater than a first preset threshold; the value represented by the downlink status information is less than a second preset threshold; and a preset time point; and the preset time point is capable of being adjusted when the value represented by the downlink status information satisfies a preset condition.

For example, in the wireless relay communications system, the first radio access network device is a relay node in the wireless relay communications system, the second radio access network device is the donor base station in the wireless relay communications system, and the first radio access network device may be directly connected to the donor base station, or may be indirectly connected to the donor base station through one or more other relay nodes. Alternatively, in the wireless relay communications system, both the first radio access network device and the second radio access network device are relay nodes in the wireless relay communications system, and the second radio access network device is the parent node of the first radio access network device.

The second radio access network device indicates the reporting manner and/or the at least one reporting granularity of the downlink status information of the first radio access network device. For example, in a scenario 1, the first radio access network device is a relay node in the wireless relay communications system, the second radio access network device is the donor base station in the wireless relay communications system, and the first radio access network device may be directly connected to the donor base station, or may be indirectly connected to the donor base station through one or more other relay nodes. In this case, the second radio access network device sends any one of the RRC message, the F1 interface message, or the adaptation layer message to the first radio access network device, to indicate the reporting manner and/or the at least one reporting granularity to the first radio access network device. In a scenario 2, in the wireless relay communications system, both the first radio access network device and the second radio access network device are relay nodes in the wireless relay communications system, and the second radio access network device is the parent node of the first radio access network device. In this case, the second radio access network device sends the MAC CE message or the adaptation layer message to the first radio access network device, to indicate the reporting manner and/or the at least one reporting granularity to the first radio access network device.

For descriptions of a type of the reporting granularity, refer to the descriptions in the embodiment shown in FIG. 3. Details are not described again. The second radio access network device sends configuration information of the reporting granularity to the first radio access network device, to indicate the reporting granularity used when the first radio access network device sends the downlink status information, and the second radio access network device may determine the reporting granularity corresponding to the downlink status information.

For example, the second radio access network device may indicate the reporting granularity that can be used by the first radio access network device. For example, the downlink status information reported by the first radio access network device is based on one terminal device or one relay node, or may be based on two reporting granularities: one terminal device and one relay node. For example, the downlink status information reported by the first radio access network device is based on one bearer service of one relay node, or based on one bearer service of one terminal device, or based on a child node of the radio access network device that sends the first message, or based on some of the plurality of reporting granularities.

In addition, in this application, when configuring the reporting granularity for the first radio access network device, the second radio access network device may determine, based on a reporting capability of the first radio access network device, the reporting granularity that can be used by the first radio access network device. For example, the first radio access network device sends a management type of a downlink data buffer of the first radio access network device to the second radio access network device, where the management type of the downlink data buffer is whether the buffer needs to be shared, and whether the buffer needs to be shared indicates whether the data storage buffer needs to be shared by to-be-transmitted downlink data between the first radio access network device and different child nodes or terminal devices. For example, when the management type of the downlink data buffer is that downlink data of different bearer services of different terminal devices is independently stored in the downlink buffer, the second radio access network device may determine that the first access network device supports the reporting granularity, namely, downlink status information of one bearer service of one terminal device. When the management type of the downlink data buffer is that downlink data of different terminal devices is independently stored in the downlink buffer, and the downlink buffer needs to be shared by downlink data of different bearer services of a same terminal device, the second radio access network device may determine that the first access network device does not support the reporting granularity, namely, downlink status information of one bearer service of one terminal device, but determine that the first access network device supports the reporting granularity, namely, downlink status information of one terminal device. When the management type of the downlink data buffer is that downlink data of different bearer services of different relay nodes is independently stored in the downlink buffer, the second radio access network device may determine that the first access network device supports the reporting granularity, namely, downlink status information of one bearer service of one relay node. When the management type of the downlink data buffer is that downlink data of different relay nodes is independently stored in the downlink buffer, and the downlink buffer needs to be shared by downlink data of different bearer services of a same relay node, the second radio access network device may determine that the first access network device does not support the reporting granularity, namely, downlink status information of one bearer service of one relay node, but determine that the first access network device supports the reporting granularity, namely, downlink status information of one relay node.

In this application, the reporting granularity sent by the second radio access network device to the first radio access network device may be a reporting granularity identifier. For example, when the second radio access network device indicates that the first radio access network device may use only one reporting granularity, the second radio access network device may send, to the first radio access network device, an index value corresponding to a type of the reporting granularity, and each reporting granularity corresponds one-to-one to each index value. When the second radio access network device indicates that the first radio access network device may use a plurality of reporting granularities, the second radio access network device may indicate, to the first radio access network device by using a bitmap, the reporting granularities that can be used by the first radio access network device. For example, a bitmap 11001 indicates that the first radio access network device may use reporting granularities indicated by the first bit, the second bit, and the fifth bit, and each bit in the bitmap corresponds one-to-one to each reporting granularity.

For the reporting manner, the second radio access network device sends the reporting manner to the first radio access network device, to indicate the reporting manner used when the first radio access network device sends the downlink status information. The reporting manner may be an event-triggered manner or a periodic reporting manner. For example, the second radio access network device may indicate the first radio access network device to use one or more of the following reporting manners: the value represented by the downlink status information that needs to be reported is greater than the first preset threshold, the value represented by the downlink status information that needs to be reported is less than the second preset threshold, and the time point; and the preset time point may be adjusted when the value represented by the downlink status information satisfies the preset condition.

For example, the second radio access network device configures an event trigger threshold for the downlink status information. For example, if the reporting manner is that a downlink buffer occupancy ratio is greater than or equal to a preset threshold, the first radio access network device sends the first message to the second radio access network device when determining that the downlink buffer occupancy ratio is greater than or equal to the preset threshold. Alternatively, if the reporting manner is that a remaining downlink buffer size is less than or equal to a preset threshold, the first radio access network device sends the first message to the second radio access network device when determining that the remaining downlink buffer size is less than or equal to the preset threshold.

For example, the second radio access network device configures a reporting periodicity for the downlink status information, so that the first radio access network device sends the first message to the second radio access network device based on a time point indicated by the reporting periodicity. For example, the reporting manner is setting a timer (timer). In this case, after determining that the timer expires, the first radio access network device determines to send the first message to the second radio access network device, and the first radio access network device resets the timer after reporting the first message.

For example, the second radio access network device configures, for the downlink status information, a reporting manner in which an event trigger threshold and a reporting periodicity are combined. In addition, when the second radio access network device configures the event trigger threshold and the reporting periodicity for the downlink status information, the first radio access network device may determine whether to reconfigure the reporting periodicity based on the event trigger threshold. For example, when the first radio access network device determines that the event trigger threshold does not affect the reporting periodicity, the two reporting manners, namely, the event trigger threshold and the reporting periodicity, independently work in a decoupled manner. In this case, a time domain interval between a next periodic reporting opportunity and a previous periodic reporting opportunity is the configured reporting periodicity, and a time point indicated by the reporting periodicity is not reconfigured. When the event trigger threshold affects the reporting periodicity, the first radio access network device may reconfigure, based on an event triggered by the event trigger threshold, a time point indicated by the reporting periodicity. Alternatively, when the event trigger threshold affects the reporting periodicity, the first radio access network device adjusts, based on an event triggered by the event trigger threshold, a time point indicated by the reporting periodicity, that is, a time domain interval between a next periodic reporting opportunity and a previous periodic reporting opportunity or an event-triggered reporting opportunity is the configured reporting periodicity. For example, if the second radio access network device indicates the first radio access network device to send the first message to the second radio access network device at an interval of 10 milliseconds, the first radio access network device separately sends the first message to the second radio access network device at the 10^{th} millisecond, the 20^{th} millisecond, and the 30^{th} millisecond. In this case, if the first radio access network device determines, at the 35^{th} millisecond, that a downlink buffer occupancy ratio is greater than or equal to a preset threshold, the first radio access network device determines to adjust a time point indicated by a reporting periodicity, the first radio access network device determines to reset the timer and then retiming, and the first radio access network device may separately send the first message to the second radio access network device at the 45^{th} millisecond and the 55^{th} millisecond. In this case, an interval of the reporting periodicity is still 10 milliseconds.

S203: The first radio access network device determines, based on at least one of a routing management type, a buffer management type, and a size of a communication resource allocated by the first radio access network device to the first message, the reporting granularity corresponding to the first message.

For example, the first radio access network device may send the first message to the second radio access network device based on the reporting granularity indicated by the second radio access network device in S202. In this process, the first radio access network device needs to consider a current status, to select an appropriate reporting granularity. For example, when the second radio access network device indicates that the first radio access network device can select a plurality of reporting granularities, the first radio access network device may specifically determine, based on at least one of the routing management type, the buffer management type, and the size of the communication resource allocated by the first radio access network device to the first message, to select a reporting granularity.

For example, when the first radio access network device performs routing management based on path information, the first radio access network device may report the downlink status information at a reporting granularity that is based on the child node of the radio access network device that sends the first message. When the first radio access network device performs routing management based on a target node address, and a terminal device is a target node of routing table information, the first radio access network device may report the downlink status information at a reporting granularity that is based on one terminal device. When the first radio access network device performs routing management based on a target node address, and a relay node accessed by a terminal device is a target node of routing table information, the first radio access network device may report the downlink status information at a reporting granularity based on one relay node.

When the management type of the downlink data buffer is that downlink data of different bearer services of different terminal devices is independently stored in the downlink buffer, the first access network device supports the reporting granularity, namely, downlink status information of one bearer service of one terminal device. When the management type of the downlink data buffer is that downlink data of different terminal devices is independently stored in the downlink buffer, and the downlink buffer needs to be shared by downlink data of different bearer services of a same terminal device, the first access network device does not support the reporting granularity, namely, downlink status information of one bearer service of one terminal device, but supports the reporting granularity, namely, downlink status information of one terminal device. When the management type of the downlink data buffer is that downlink data of different bearer services of different relay nodes is independently stored in the downlink buffer, the first access network device supports the reporting granularity, namely, downlink status information of one bearer service of one relay node. When the management type of the downlink data buffer is that downlink data of different relay nodes is independently stored in the downlink buffer, and the downlink buffer needs to be shared by downlink data of different bearer services of a same relay node, the first access network device does not support the reporting granularity, namely, downlink status information of one bearer service of one relay node, but supports the reporting granularity, namely, downlink status information of one relay node.

Because overheads of different reporting granularities are different, the first radio access network device can determine, based on the size of the resource allocated to the first message, a reporting granularity that can be used. For example, when the communication resource used to transmit the downlink status information is insufficient to transmit all fine-grained downlink status information, or when a quantity of remaining padding (padding) bits in an uplink scheduling resource is insufficient to transmit all fine-grained downlink status information, the first radio access network device may report the downlink status information at a more coarse-grained reporting granularity. For example, when the communication resource used to transmit the downlink status information is insufficient to transmit downlink status information of all bearer services of all terminal devices, the first radio access network device may select a coarser reporting granularity based on a current remaining resource quantity and a supported reporting granularity type. If a remaining communication resource is insufficient to transmit downlink status information of all types of reporting granularities supported by the first radio access network device, the first radio access network device selects one reporting granularity supported by the first radio access network device, reports some pieces of downlink status information, and reports, as much as possible based on a size of the remaining resource, downlink status information that needs to be transmitted.

S204: The first radio access network device generates the first message.

For example, for this step, refer to step S101 in FIG. 3. Details are not described again.

S205: The first radio access network device sends the first message to the second radio access network device, where the first message includes at least one reporting granularity and downlink status information corresponding to each of the at least one reporting granularity.

When the second radio access network device is the donor base station, the first message is any one of the following: a radio resource control (RRC) message, an F1 interface message, and an adaptation layer message.

When the second radio access network device is the parent node of the first radio access network device, the first message is a MAC CE message or an adaptation layer message.

In step S205, the reporting granularity is a reporting granularity identifier; and all reporting granularity identifiers and downlink status information corresponding to the reporting granularity identifiers in the first message are sequentially arranged, and each reporting granularity identifier is adjacent to the downlink status information corresponding to the reporting granularity identifier; or after the at least one reporting granularity identifier in the first message is sequentially arranged, all pieces of downlink status information are sequentially arranged.

When the first message is a MAC CE message, for example, step S205 includes:
sending, by the first radio access network device, the first message to the second radio access network device in a preset logical channel prioritization order, where the preset logical channel prioritization order is used to indicate a prioritization sequence of logical channel of a MAC CE corresponding to the first message and another logical channel.

For example, when the first radio access network device sends the first message to the second radio access network device, in a scenario 1, the first radio access network device is a relay node in the wireless relay communications system, the second radio access network device is the donor base station in the wireless relay communications system, and the first radio access network device may be directly connected to the donor base station, or may be indirectly connected to the donor base station through one or more other relay nodes. In this case, the first radio access network device sends any one of the RRC message, the F1 interface message, or the adaptation layer message to the second radio access network device, to send the first message to the second radio access network device. In a scenario 2, in the wireless relay communications system, both the first radio access network device and the second radio access network device are relay nodes in the wireless relay communications system, and the second radio access network device is the parent node of the first radio access network device. In this case, the first radio access network device sends the MAC CE message or the adaptation layer message to the second radio access network device, to send the first message to the second radio access network device.

In this application, the reporting granularity sent by the first radio access network device to the second radio access network device may be the reporting granularity identifier. In this application, the reporting granularity identifier may be a terminal device identifier or a relay node identifier. The terminal device identifier is, for example, an international mobile subscriber identity (international mobile subscriber identity, IMSI), a cell radio network temporary identity (cell radio network temporary identity, C-RNTI), an international mobile equipment identity (international mobile equipment identity, IMEI), a temporary mobile equipment identity (temporary mobile subscriber identity, TMSI), or an internet protocol (internet protocol, IP) address of a terminal device. The relay node identifier is, for example, a cell identifier (cell ID), an identifier of a relay node (relay node, RN), a DU identifier of an IAB node, an MT identifier of the IAB node, an E-UTRAN cell global identifier (E-UTRAN cell global identifier, ECGI), an NR cell global identifier (NR cell global identifier, NCGI), an IP address of the IAB node, an IP address of a DU of the IAB node, an IP address of an MT of the IAB node, and an identifier allocated by a CU for an adaptation layer of the IAB node. In this application, when the reporting granularity is a bearer service, the reporting granularity identifier may be a terminal device identifier and a bearer service identifier of a terminal device, or the reporting granularity identifier may be a relay node identifier and a bearer service identifier of a relay node.

In the first message, a plurality of arrangement formats may be used for each reporting granularity identifier and downlink status information corresponding to the reporting granularity identifier.

In a first format, in the first message, all reporting granularity identifiers and downlink status information corresponding to the reporting granularity identifiers are sequentially arranged, and each reporting granularity identifier is adjacent to the downlink status information corresponding to the reporting granularity identifier.

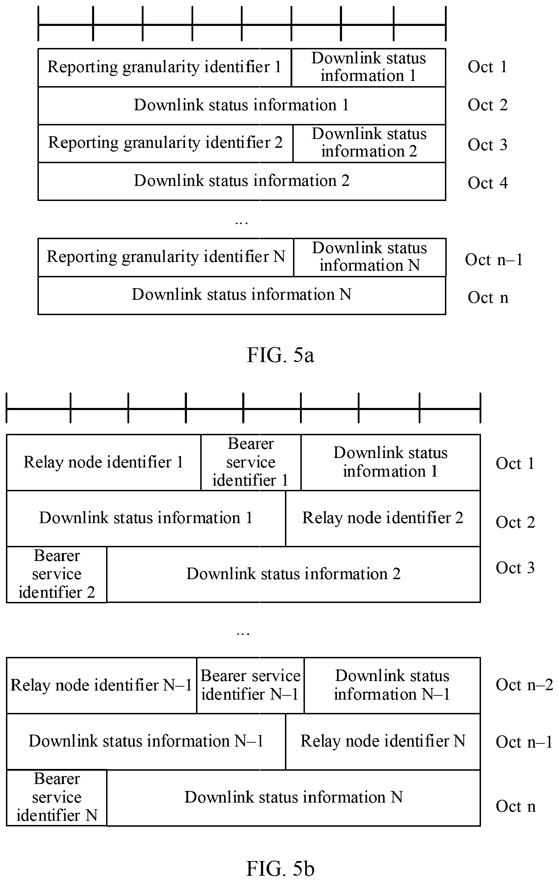

For example, FIG. 5a is a first schematic structural diagram of a first message according to an embodiment of this application. As shown in FIG. 5a, each reporting granularity identifier is adjacent to downlink status information corresponding to the reporting granularity identifier, and then reporting granularity identifiers that belong to different reporting granularities and downlink status information are sequentially arranged. For example, a reporting granularity identifier 1, downlink status information 1 corresponding to the reporting granularity identifier 1, a reporting granularity identifier 2, downlink status information 2 corresponding to the reporting granularity identifier 2, ..., a reporting granularity identifier N, and downlink status information N corresponding to the reporting granularity identifier N are sequentially arranged. In FIG. 5a, each row is an Oct i, i is a positive integer greater than or equal to 1 and less than or equal to n, and both n and N are positive integers. In FIG. 5a, if the last byte is not padded, a reserved bit (reserved bits) is used for padding. For example, the reserved bit is set to 0.

For example, FIG. 5b is a second schematic structural diagram of a first message according to an embodiment of this application. As shown in FIG. 5b, each reporting granularity identifier is adjacent to downlink status information corresponding to the reporting granularity identifier, and then reporting granularity identifiers that belong to different reporting granularities and downlink status information are sequentially arranged, where the reporting granularity identifier includes a relay node identifier and a bearer service identifier of a relay node. For example, a relay node identifier 1, a bearer service identifier 1 of a relay node 1, downlink status information 1, a relay node identifier 2, a bearer service identifier 2 of a relay node 2, downlink status information 2, a relay node identifier N-1, a bearer service identifier N-1 of a relay node N-1, downlink status information N-1, ..., a relay node identifier N, a bearer service identifier N of a relay node N, and downlink status information N are sequentially arranged. In FIG. 5b, each row is an Oct i, i is a positive integer greater than or equal to 1 and less than or equal to n, and both n and N are positive integers. In FIG. 5b, if the last byte is not padded, a reserved bit is used for padding, for example, the reserved bit is set to 0.

In a second format, after the at least one reporting granularity identifier in the first message is sequentially arranged, all pieces of downlink status information are sequentially arranged.

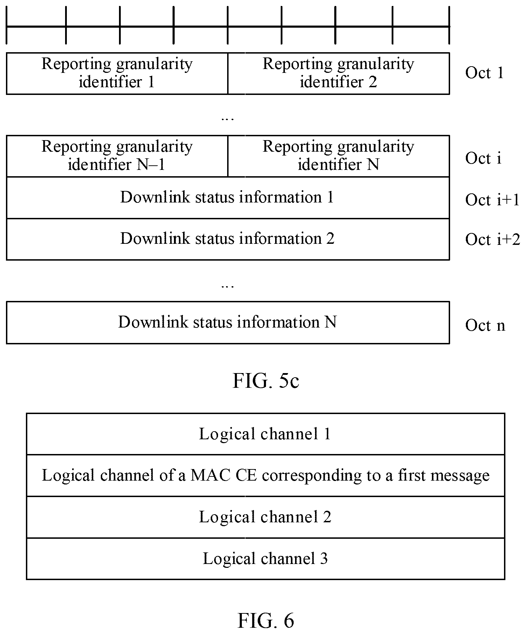

For example, FIG. 5c is a third schematic structural diagram of a first message according to an embodiment of this application. As shown in FIG. 5c, after all reporting granularity identifiers are sequentially arranged, all pieces of downlink status information are sequentially arranged. For example, a reporting granularity identifier 1, a reporting granularity identifier 2, ..., a reporting granularity identifier N-1, a reporting granularity identifier N, downlink status information 1 corresponding to the reporting granularity identifier 1, downlink status information 2 corresponding to the reporting granularity identifier 2, ..., and downlink status information N corresponding to the reporting granularity identifier N are sequentially arranged. In FIG. 5c, each row is an Oct i, i is a positive integer greater than or equal to 1 and less than or equal to n, and both n and N are positive integers. All the reporting granularity identifiers are placed before the downlink status information. A quantity of reporting granularity identifiers is the same as a quantity of pieces of downlink status information, and the reporting granularity identifier corresponds one-to-one to the downlink status information. In FIG. 5c, if the last byte is not padded, a reserved bit is used for padding. For example, the reserved bit is set to 0.

Quantities of bits occupied by the reporting granularity identifier and quantities of bits occupied by the downlink status information in FIG. 5a, FIG. 5b, and FIG. 5c are merely examples. This is not limited in this application.

In this application, a protocol layer/an interface on which the first radio access network device performs reporting is any one of or a combination of the following: a MAC CE or a MAC header, an adaptation layer (adaption layer), an F1 interface, an RRC layer, and an X2/Xn interface.

In this application, when the first message is a MAC CE message, the first radio access network device sends the reporting granularity and the downlink status information to the second radio access network device in a form of the MAC CE message. In this case, the logical channel prioritization (logical channel prioritization, LCP) order needs to be adjusted. For example, the first radio access network device sends the reporting granularity and the downlink status information to the second radio access network device in the form of the MAC CE message. Therefore, a MAC CE needs to be added. The MAC CE corresponds to the first message, and a logical channel identifier is defined for the newly added MAC CE. Because the new MAC CE is added, in a logical channel prioritization process, a prioritization sequence of logical channel of the newly added MAC CE and another logical channel during uplink communication needs to be defined. For example, the newly added MAC CE is placed at a position in an existing logical channel prioritization order. In an example, a priority of the newly added MAC CE may be placed before a MAC CE of a BSR other than a padding buffer status report (buffer status report, BSR). Therefore, an obtained logical channel prioritization order may indicate the prioritization sequence of the MAC CE corresponding to the first message and the another logical channel. In step S205, the first radio access network device sends, to the second radio access network device in the logical channel prioritization order to which the MAC CE is added, the MAC CE message used to indicate the reporting granularity and the downlink status information. For example, FIG. 6 is a diagram of a sequence of logical channels in a logical channel prioritization order according to an embodiment of this application. As shown in FIG. 6, a prioritization sequence is a logical channel 1, a logical channel of a MAC CE corresponding to a first message, a logical channel 2, and a logical channel 3 in sequence.

S206: The second radio access network device sends second indication information to the first radio access network device, where the second indication information is used to indicate the first radio access network device to switch a link.

For example, after the second radio access network device receives the downlink status information, the second radio access network device may send the second indication information to the first radio access network device, to indicate the first radio access network device to switch the link; or the second radio access network device reduces ak communication rate of a downlink transmission to the first radio access network device; or the second radio access network device allocates a time-frequency resource to the first radio access network device, to further allocate more time-frequency resources to the first radio access network device.

When the downlink status information indicates that no congestion occurs in the first radio access network device, the second radio access network device may increase a communication rate of a downlink transmission to the first radio access network device; or the second radio access network device reduces time-frequency resources allocated to the first radio access network device.

In this embodiment, the first radio access network device sends the first message to the second radio access network device, where the first message includes the at least one reporting granularity and the downlink status information corresponding to each of the at least one reporting granularity, and the second radio access network device is the parent node of the first radio access network device or the donor base station in the wireless relay communications system; and then the second radio access network device indicates the first radio access network device to switch the link, or the second radio access network device reduces the downlink communication rate of the first radio access network device, or the second radio access network device allocates the time-frequency resource to the first radio access network device. The first radio access network device feeds back the downlink status information to the second radio access network device in real time, so that the parent node of the first radio access network device or the donor base station can learn of a downlink status in time, to learn of a downlink buffer congestion status. In this way, the parent node of the first radio access network device or the donor base station can control and process a downlink in time, and complete flow control processing in an IAB scenario. In this way, downlink congestion caused by a factor such as link interruption is effectively avoided, a packet loss and a latency of downlink data can be avoided, and it is ensured that the terminal device receives the data in time. In addition, the mapping relationship is provided to indicate the correspondence between the status value and the index value.

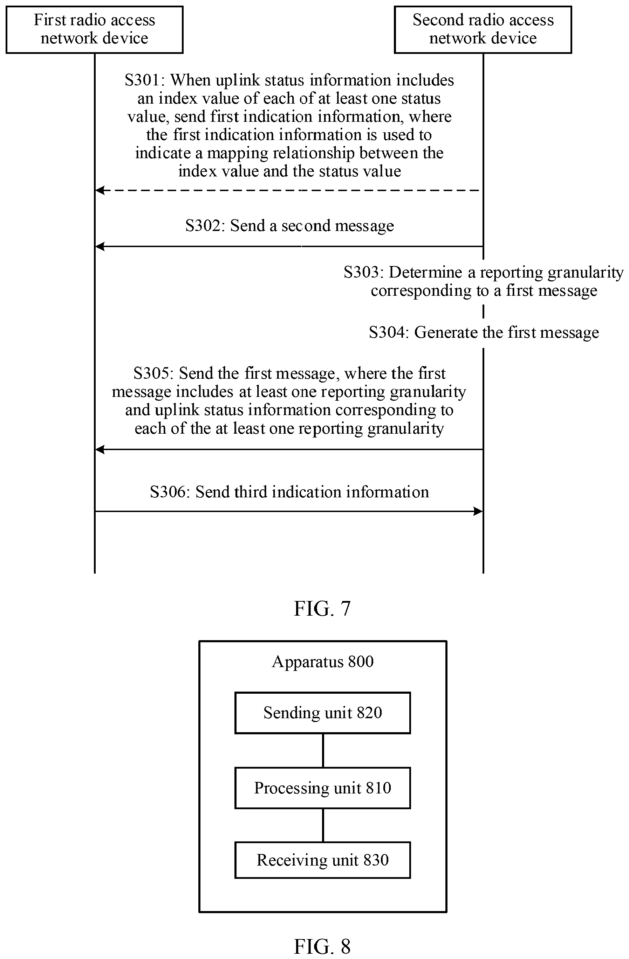

FIG. 7 is a schematic flowchart of still another communication control method according to an embodiment of this application. The method may be used in the communications systems shown in FIG. 1a to FIG. 2. However, this embodiment of this application is not limited thereto. In this embodiment of this application, a wireless relay communications system includes a radio access network device and a donor base station, and the radio access network device has one or more previous-hop nodes on an uplink.

S301: When uplink status information includes an index value of each of at least one status value, a second radio access network device sends first indication information to a first radio access network device, where the first indication information is used to indicate a mapping relationship between the index value and the status value. Alternatively, when uplink status information includes an index value of each of at least one status value, in step S304, a first message further includes first indication information.

S302: The second radio access network device sends a second message to the first radio access network device, where the second message includes a reporting manner and/or a reporting granularity. The first radio access network device is a relay node or a terminal device in the wireless relay communications system, and the second radio access network device is a parent node of the first radio access network device or the donor base station in the wireless relay communications system.

S303: The second radio access network device determines, based on at least one of a routing management type, a buffer management type, and a size of a communication resource allocated by the second radio access network device to the first message, a reporting granularity corresponding to the first message.

S304: The second radio access network device generates the first message.

S305: The second radio access network device sends the first message to the first radio access network device, where the first message includes at least one reporting granularity and uplink status information corresponding to each of the at least one reporting granularity.

S306: The first radio access network device sends third indication information to the second radio access network device, where the third indication information is used to indicate the second radio access network device to switch a link.

For example, for the uplink status information, refer to the methods shown in FIG. 3 and FIG. 4. Details are not described again.

In this embodiment, the second radio access network device sends the first message to the first radio access network device, where the first message includes the at least one reporting granularity and the uplink status information corresponding to each of the at least one reporting granularity, and the second radio access network device is the parent node of the first radio access network device or the donor base station. The second radio access network device feeds back the uplink status information to the first radio access network device in real time, so that a child node of the second radio access network device can learn of an uplink status in time, to learn of an uplink buffer congestion status. In this way, the child node of the second radio access network device can control and process an uplink in time, and complete flow control processing in an IAB scenario. In this way, uplink congestion caused by a factor such as link interruption is effectively avoided, a packet loss and a latency of uplink data can be avoided, and it is ensured that the donor base station receives the data in time, so that an uplink data latency requirement is satisfied.

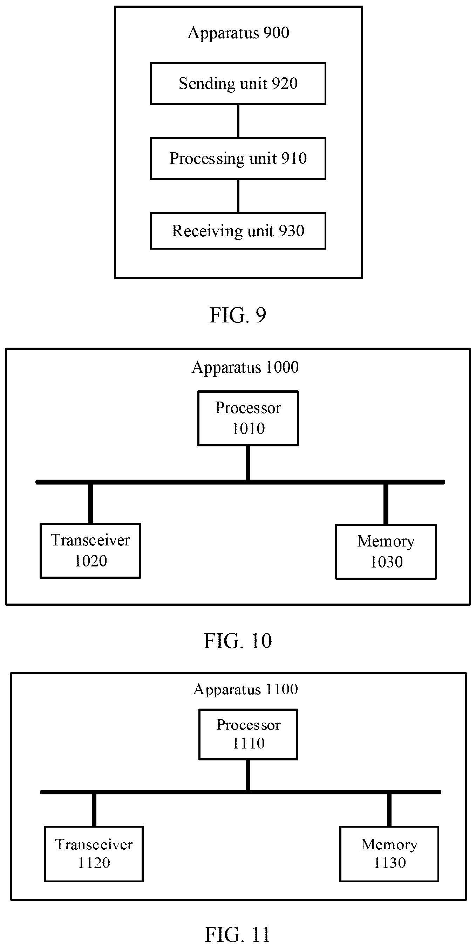

The foregoing describes in detail the communication control methods according to the embodiments of this application with reference to FIG. 3 to FIG. 7. The following describes in detail communications apparatuses according to embodiments of this application with reference to FIG. 8 and FIG. 9.

FIG. 8 shows a communications apparatus 800 used in a first radio access network device according to an embodiment of this application. The apparatus 800 may be a relay node or a chip in a relay node in a wireless relay communications system. The apparatus 800 includes a processing unit 810, a sending unit 820, and a receiving unit 830.

In a possible implementation, the apparatus 800 is configured to perform the procedures and the steps corresponding to the first radio access network device in the method shown in FIG. 3, FIG. 4, or FIG. 7.

The processing unit 810 is configured to generate a first message. In this case, the processing unit 810 may perform step S101 in FIG. 3 and step S204 in FIG. 4.

The sending unit 820 is configured to send the first message to a second radio access network device, where the first message includes at least one reporting granularity and downlink status information corresponding to each of the at least one reporting granularity, where the first radio access network device is a relay node in the wireless relay communications system, and the second radio access network device is a parent node of the first radio access network device or a donor base station of the first radio access network device in the wireless relay communications system. In this case, the sending unit 820 may perform step S102 in FIG. 3 and step S205 in FIG. 4.

Alternatively, the receiving unit 830 is configured to receive a first message sent by a second radio access network device, where the first message includes at least one reporting granularity and uplink status information corresponding to each of the at least one reporting granularity. In this case, the receiving unit 830 may perform step S305 in FIG. 7.

The reporting granularity is one or more of the following: one terminal device, one bearer service of one terminal device, one relay node, and one bearer service of one relay node; and the relay node is the radio access network device that sends the first message, or a child node of the radio access network device that sends the first message, or a radio access network device accessed by the terminal device.

The downlink status information includes at least one status value, or an index value of each of at least one status value; the status value is any one of the following: a remaining downlink buffer size, a downlink buffer occupancy ratio, an expected downlink communication rate, a congestion level, a downlink buffer status difference, and a downlink buffer size combination; and the downlink buffer status difference is a difference between the status value and a status value reported by the first radio access network device last time, and the downlink buffer size combination includes a total downlink buffer size and a current downlink buffer size.

When the downlink status information includes the index value of each of the at least one status value, the first message further includes first indication information, and the first indication information is used to indicate a mapping relationship between the index value and the status value; or the sending unit 820 is further configured to send first indication information to the second radio access network device. In this case, the sending unit 820 may perform step S201 in FIG. 4. Alternatively, when the uplink status information includes an index value of each of at least one status value, the first message further includes first indication information, and the first indication information is used to indicate a mapping relationship between the index value and the status value; or the receiving unit 830 is further configured to receive first indication information sent by the second radio access network device. In this case, the receiving unit 830 may perform step S301 in FIG. 7.

The receiving unit 830 is configured to receive a second message sent by the second radio access network device, where the second message includes a reporting manner and/or the at least one reporting granularity. In this case, the receiving unit 830 may perform step S202 in FIG. 4 and step S302 in FIG. 7.

When the second radio access network device is the donor base station, the second message is any one of the following: an RRC message, an F1 interface message, and an adaptation layer message.

When the second radio access network device is the parent node of the first radio access network device, the second message is a MAC CE message or an adaptation layer message.

The reporting manner is one or more of the following: a value represented by the downlink status information is greater than a first preset threshold; the value represented by the downlink status information is less than a second preset threshold; and a preset time point; and the preset time point is capable of being adjusted when the value represented by the downlink status information satisfies a preset condition.

When the second radio access network device is the donor base station, the first message is any one of the following: a radio resource control (RRC) message, an F1 interface message, and an adaptation layer message.

When the second radio access network device is the parent node of the first radio access network device, the first message is a MAC CE message or an adaptation layer message.

The reporting granularity is a reporting granularity identifier; and all reporting granularity identifiers and downlink status information corresponding to the reporting granularity identifiers in the first message are sequentially arranged, and each reporting granularity identifier is adjacent to the downlink status information corresponding to the reporting granularity identifier; or after the at least one reporting granularity identifier in the first message is sequentially arranged, all pieces of downlink status information are sequentially arranged.

When the first message is a MAC CE message, for example, the sending unit 820 is configured to send the first message to the second radio access network device in a preset logical channel prioritization order, where the preset logical channel prioritization order is used to indicate a prioritization sequence of logical channel of a MAC CE corresponding to the first message and another logical channel. In this case, the sending unit 820 may perform step S205 in FIG. 4.

The processing unit 810 is further configured to determine, based on at least one of a routing management type, a buffer management type, and a size of a communication resource allocated by the first radio access network device to the first message, the reporting granularity corresponding to the first message. In this case, the processing unit 810 may perform step S203 in FIG. 4.

The receiving unit 830 is configured to receive second indication information sent by the second radio access network device, where the second indication information is used to indicate the first radio access network device to switch a link. In this case, the receiving unit 830 may perform step S206 in FIG. 4. Alternatively, the sending unit 820 is configured to send third indication information to the second radio access network device, where the third indication information is used to indicate the second radio access network device to switch a link. In this case, the sending unit 820 may perform step S306 in FIG. 7.

For example, the apparatus 800 herein is presented in a form of a functional unit. The term "unit" herein may refer to an application-specific integrated circuit (application specific integrated circuit, ASIC), an electronic circuit, a processor (for example, a shared processor, a special purpose processor, or a group processor) configured to execute one or more software or firmware programs, a memory, a merged logic circuit, and/or another suitable component that supports the described function. In an optional example, a person skilled in the art may understand that the apparatus 800 may be specifically the first radio access network device in the foregoing embodiment, and the apparatus 800 may be configured to perform the procedures and/or the steps corresponding to the first radio access network device in the foregoing method embodiment. To avoid repetition, details are not described herein again.

The apparatus 800 in each of the foregoing solutions has a function of implementing a corresponding step performed by the first radio access network device in the foregoing method. The function may be implemented by hardware, or may be implemented by hardware by executing corresponding software. The hardware or the software includes one or more modules corresponding to the foregoing function. For example, the sending unit may be replaced with a transmitter, the receiving unit may be replaced with a receiver, and another unit such as a determining unit may be replaced with a processor, to respectively perform a sending operation, a receiving operation, and a related processing operation in the method embodiments.

In this embodiment of this application, the apparatus in FIG. 8 may alternatively be a chip or a chip system, for example, a system on chip (system on chip, SoC). Correspondingly, the receiving unit and the sending unit may be a transceiver circuit of the chip. This is not limited herein.

FIG. 9 shows a communications apparatus 900 used in a second radio access network device according to an embodiment of this application. The apparatus 900 may be a relay node or a chip in a relay node in a wireless relay communications system. The second radio access network device may be a donor base station or a chip in a donor base station. The apparatus 900 includes a processing unit 910, a sending unit 920, and a receiving unit 930.

In a possible implementation, the apparatus 900 is configured to perform the procedures and the steps corresponding to the second radio access network device in the method shown in FIG. 3, FIG. 4, or FIG. 7.

The receiving unit 930 is configured to receive a first message sent by a first radio access network device, where the first message includes at least one reporting granularity and downlink status information corresponding to each of the at least one reporting granularity, where the first radio access network device is a relay node in the wireless relay communications system, and the second radio access network device is a parent node of the first radio access network device or the donor base station in the wireless relay communications system. In this case, the receiving unit 930 may perform step S102 in FIG. 3 and step S205 in FIG. 4.

Alternatively, the processing unit 910 is configured to: determine, based on at least one of a routing management type, a buffer management type, and a size of a communication resource allocated by the second radio access network device for a first message, a reporting granularity corresponding to the first message; and generate the first message. In this case, the processing unit 910 may perform steps S303 and 5304 in FIG. 7. The sending unit 920 is configured to send the first message to a first radio access network device, where the first message includes at least one reporting granularity and uplink status information corresponding to each of the at least one reporting granularity. In this case, the sending unit 920 may perform step S305 in FIG. 7.

The reporting granularity is one or more of the following: one terminal device, one bearer service of one terminal device, one relay node, and one bearer service of one relay node; and the relay node is the radio access network device that sends the first message, or a child node of the radio access network device that sends the first message, or a radio access network device accessed by the terminal device.

The downlink status information includes at least one status value, or an index value of each of at least one status value; the status value is any one of the following: a remaining downlink buffer size, a downlink buffer occupancy ratio, an expected downlink communication rate, a congestion level, a downlink buffer status difference, and a downlink buffer size combination; and the downlink buffer status difference is a difference between the status value and a status value reported by the first radio access network device last time, and the downlink buffer size combination includes a total downlink buffer size and a current downlink buffer size.

When the downlink status information includes the index value of each of the at least one status value, the first message further includes first indication information, and the first indication information is used to indicate a mapping relationship between the index value and the status value; or the receiving unit 930 is further configured to receive first indication information sent by the first radio access network device. In this case, the receiving unit 930 may perform step S201 in FIG. 4. Alternatively, when uplink status information includes an index value of each of at least one status value, the first message further includes first indication information, and the first indication information is used to indicate a mapping relationship between the index value and the status value; or the sending unit 920 is configured to send first indication information to the first radio access network device. In this case, the sending unit 920 may perform step S301 in FIG. 7.

The sending unit 920 is configured to send a second message to the first radio access network device, where the second message includes a reporting manner and/or the at least one reporting granularity. In this case, the sending unit 920 may perform step S202 in FIG. 4 and step S302 in FIG. 7.

When the second radio access network device is the donor base station, the second message is any one of the following: an RRC message, an F1 interface message, and an adaptation layer message.

When the second radio access network device is the parent node of the first radio access network device, the second message is a MAC CE message or an adaptation layer message.

The reporting manner is one or more of the following: a value represented by the downlink status information is greater than a first preset threshold; the value represented by the downlink status information is less than a second preset threshold; and a preset time point; and the preset time point is capable of being adjusted when the value represented by the downlink status information satisfies a preset condition.

When the second radio access network device is the donor base station, the first message is any one of the following: a radio resource control (RRC) message, an F1 interface message, and an adaptation layer message.

When the second radio access network device is the parent node of the first radio access network device, the first message is a MAC CE message or an adaptation layer message.

The reporting granularity is a reporting granularity identifier; and all reporting granularity identifiers and downlink status information corresponding to the reporting granularity identifiers in the first message are sequentially arranged, and each reporting granularity identifier is adjacent to the downlink status information corresponding to the reporting granularity identifier; or after the at least one reporting granularity identifier in the first message is sequentially arranged, all pieces of downlink status information are sequentially arranged.

The sending unit 920 is configured to send second indication information to the first radio access network device, where the second indication information is used to indicate the first radio access network device to switch a link. In this case, the sending unit 920 may perform step S206 in FIG. 4. Alternatively, the processing unit 910 is configured to reduce a communication rate of a downlink transmission to the first radio access network device. Alternatively, the processing unit 910 is further configured to allocate a time-frequency resource to the first radio access network device. Alternatively, the receiving unit 930 is configured to receive third indication information sent by the first radio access network device, where the third indication information is used to indicate the second radio access network device to switch a link. In this case, the receiving unit 930 may perform step S306 in FIG. 7.

For example, the apparatus 900 herein is presented in a form of a functional unit. The term "unit" herein may refer to an ASIC, an electronic circuit, a processor (for example, a shared processor, a special purpose processor, or a group processor) configured to execute one or more software or firmware programs, a memory, a merged logic circuit, and/or another appropriate component that supports the described function. In an optional example, a person skilled in the art may understand that the apparatus 900 may be specifically the second radio access network device in the foregoing embodiment, and the apparatus 900 may be configured to perform the procedures and/or the steps corresponding to the second radio access network device in the foregoing method embodiment. To avoid repetition, details are not described herein again.

The apparatus 900 in each of the foregoing solutions has a function of implementing a corresponding step performed by the second radio access network device in the foregoing method. The function may be implemented by hardware, or may be implemented by hardware by executing corresponding software. The hardware or the software includes one or more modules corresponding to the foregoing function. For example, the sending unit may be replaced with a transmitter, the receiving unit may be replaced with a receiver, and another unit such as a determining unit may be replaced with a processor, to respectively perform a sending operation, a receiving operation, and a related processing operation in the method embodiments.

In this embodiment of this application, the apparatus in FIG. 9 may alternatively be a chip or a chip system, for example, a system on chip. Correspondingly, the receiving unit and the sending unit may be a transceiver circuit of the chip. This is not limited herein.

In the embodiments of this application, each of the apparatus in FIG. 8 and the apparatus in FIG. 9 may alternatively be a chip or a chip system, for example, a system on chip (system on chip, SoC). Correspondingly, the receiving unit and the sending unit may be a transceiver circuit of the chip. This is not limited herein.

FIG. 10 shows a communications apparatus 1000 used in a first radio access network device according to an embodiment of this application. The apparatus 1000 includes a processor 1010, a transceiver 1020, and a memory 1030. The processor 1010, the transceiver 1020, and the memory 1030 communicate with each other through an internal connection path. The memory 1030 is configured to store an instruction. The processor 1010 is configured to execute the instruction stored in the memory 1030, to control the transceiver 1020 to send a signal and receive a signal.

In a possible implementation, the apparatus 1000 is configured to perform the procedures and the steps corresponding to the first radio access network device in the foregoing method.

The processor 1010 is configured to perform step S101 in FIG. 3, step S203 in FIG. 4, and step S204 in FIG. 4.

The transceiver 1020 is configured to perform step 5202 and step S206 in FIG. 4; step S302, step S305, and step S301 in FIG. 7; step S102 in FIG. 3; step S205 and step S201 in FIG. 4; and step S306 in FIG. 7.

For example, the apparatus 1000 may be specifically the first radio access network device in the foregoing embodiment, and may be configured to perform the steps and/or the procedures corresponding to the first radio access network device in the foregoing method embodiment. Optionally, the memory 1030 may include a read-only memory and a random access memory, and provide an instruction and data to the processor. A part of the memory may further include a nonvolatile random access memory. For example, the memory may further store information about a device type. The processor 1010 may be configured to execute the instruction stored in the memory. In addition, when the processor 1010 executes the instruction stored in the memory, the processor 1010 is configured to perform the steps and/or the procedures corresponding to the first radio access network device in the foregoing method embodiment.

For example, in this embodiment of this application, the processor in the foregoing apparatus may be a central processing unit (central processing unit, CPU), or the processor may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or may be any conventional processor or the like.

FIG. 11 shows a communications apparatus 1100 used in a second radio access network device according to an embodiment of this application. The apparatus 1100 includes a processor 1110, a transceiver 1120, and a memory 1130. The processor 1110, the transceiver 1120, and the memory 1130 communicate with each other through an internal connection path. The memory 1130 is configured to store an instruction. The processor 1110 is configured to execute the instruction stored in the memory 1130, to control the transceiver 1120 to send a signal and receive a signal.

In a possible implementation, the apparatus 1100 is configured to perform the procedures and the steps corresponding to the second radio access network device in the foregoing method.

The transceiver 1120 is configured to perform step 5202 and step S206 in FIG. 4; step S302, step S305, and step S301 in FIG. 7; step S102 in FIG. 3; step S205 and step S201 in FIG. 4; and step S306 in FIG. 7.

The processor 1110 is configured to perform steps S303 and S304 in FIG. 7.

For example, the apparatus 1110 may be specifically the second radio access network device in the foregoing embodiment, and may be configured to perform the steps and/or the procedures corresponding to the second radio access network device in the foregoing method embodiment. Optionally, the memory 1130 may include a read-only memory and a random access memory, and provide an instruction and data to the processor. A part of the memory may further include a nonvolatile random access memory. For example, the memory may further store information about a device type. The processor 1110 may be configured to execute the instruction stored in the memory. In addition, when the processor 1110 executes the instruction stored in the memory, the processor 1110 is configured to perform the steps and/or the procedures corresponding to the second radio access network device in the foregoing method embodiment.

For example, in this embodiment of this application, the processor in the foregoing apparatus may be a CPU, or the processor may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or may be any conventional processor or the like.

In an implementation process, the steps in the foregoing methods can be implemented by using a hardware integrated logic circuit in the processor, or by using an instruction in a form of software. The steps in the methods disclosed with reference to the embodiments of this application may be directly performed by a hardware processor, or may be performed by using a combination of hardware and a software unit in the processor. The software unit may be located in a mature storage medium in the art, such as a random access memory, a flash memory, a read-only memory, a programmable read-only memory, an electrically erasable programmable memory, or a register. The storage medium is located in the memory, and the processor executes the instruction in the memory and completes the steps in the foregoing method in combination with the hardware of the processor. To avoid repetition, details are not described herein again.

In this application, "at least one" means one or more, and "a plurality of" means two or more than two. The term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of the following, including any combination of one or more of the following. For example, at least one of a, b, or c may indicate: a, b, c, a and b, a and c, b and c, or a, b, and c, where a, b, and c may be singular or plural.

A person of ordinary skill in the art may be aware that, method steps and units described in the embodiments disclosed in this specification may be implemented by electronic hardware, computer software, or a combination thereof. To clearly describe interchangeability between the hardware and the software, the foregoing has generally described steps and compositions of each embodiment according to functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments in this application.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software function unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A communication control method, comprising:
generating, by a first radio access network device (800, 1000), a first message; and
sending, by the first radio access network device (800, 1000), the first message to a second radio access network device (900, 1100), wherein the first message comprises identifier of a radio access network device accessed by a terminal device and downlink status information corresponding to the identifier of the radio access network device accessed by the terminal device, wherein
the first radio access network device (800, 1000) is a relay node in a wireless relay communications system for the terminal device, and the second radio access network device (900, 1100) is a parent node of the first radio access network device (800, 1000) or a donor base station of the first radio access network device (800, 1000) in the wireless relay communications system,
wherein the method further comprises:
receiving, by the first radio access network device (800, 1000), a second message from the second radio access network device (900, 1100), wherein the second message comprises a reporting manner and/or at least one reporting granularity.

2. The method according to claim 1, wherein the reporting manner comprises that a downlink buffer occupancy ratio is greater than a preset threshold or a remaining downlink buffer size is less than a preset threshold;
wherein the sending, by the first radio access network device (800, 1000), the first message to the second radio access network device (900, 1100), comprises:
sending, by the first radio access network device (800, 1000), the first message to the second radio access network device (900, 1100) when the downlink buffer occupancy ratio is greater than the preset threshold or when the remaining downlink buffer size is less than the preset threshold.

3. The method according to claim 1 or 2, wherein the generating, by the first radio access network device (800, 1000), the first message comprises:
generating, by the first radio access network device (800, 1000), the first message based on the reporting granularity.

4. A communication control method, comprising:
receiving, by a second radio access network device (900, 1100), a first message from a first radio access network device (800, 1000), wherein the first message comprises identifier of a radio access network device accessed by a terminal device and downlink status information corresponding to the identifier of the radio access network device accessed by the terminal device, wherein
the first radio access network device (800, 1000) is a relay node in a wireless relay communications system for the terminal device, and the second radio access network device (900, 1100) is a parent node of the first radio access network device (800, 1000) or a donor base station of the first radio access network device (800, 1000) in the wireless relay communications system,
wherein the method further comprises:
sending, by the second radio access network device (900, 1100), a second message to the first radio access network device (800, 1000), wherein the second message comprises a reporting manner and/or at least one reporting granularity.

5. The method according to claim 4, wherein the reporting manner comprises that a downlink buffer occupancy ratio is greater than a preset threshold or a remaining downlink buffer size is less than a preset threshold.

6. The method according to any one of claims 1 to 5, wherein the first message further comprises:
identifier of a radio link control, RLC, backhaul channel and a downlink status information corresponding to the identifier of the RLC backhaul channel.

7. The method according to any one of claims 1 to 6, wherein the downlink status information comprises at least one status value;
the status value is any one of the following: a remaining downlink buffer size, a downlink buffer occupancy ratio, an expected downlink transmission rate, a congestion level, and a downlink buffer size combination.

8. The method according to any one of claims 1 to 7, wherein the first message is an adaptation layer message.

9. The method according to any one of claims 1 to 8, wherein when the second radio access network device (900, 1100) is the donor base station, the first message is any one of the following: a radio resource control, RRC, message, an F1 interface message, and an adaptation layer message.

10. The method according to any one of claims 1 to 9, wherein the radio access network device accessed by the terminal device is a integrated access and backhaul, IAB, node;
wherein the identifier of the radio access network device accessed by the terminal device is an identifier allocated by a centralized unit, CU, for an adaptation layer of the IAB node.

11. A communication apparatus, comprising modules for carrying out steps of the method according to any one of claims 1 to 3 and claims 6 to 10.

12. A communication apparatus, comprising modules for carrying out steps of the method according to any one of claims 4 to 10.

13. A communication system, comprising the communication apparatus according to claim 11 and the communication apparatus according to claim 12.

14. A computer program product, comprising computer program code which, when executed by a processor of an apparatus, cause the apparatus to carry out the steps of the method according to any one of claims 1 to 10.

15. A computer-readable storage medium comprising the computer program product according to claim 14.

## Patentansprüche

1. Kommunikationssteuerverfahren, das Folgendes umfasst:
Erzeugen, durch eine erste Funkzugangsnetzvorrichtung (800, 1000), einer ersten Nachricht; und
Senden, durch die erste Funkzugangsnetzvorrichtung (800, 1000), der ersten Nachricht an eine zweite Funkzugangsnetzvorrichtung (900, 1100), wobei die erste Nachricht eine Kennung einer Funkzugangsnetzvorrichtung, auf die eine Endgerätevorrichtung zugreift, und Downlink-Statusinformationen, die der Kennung der Funkzugangsnetzvorrichtung, auf die die Endgerätevorrichtung zugreift, entsprechen, umfasst, wobei
die erste Funkzugangsnetzvorrichtung (800, 1000), ein Relaisknoten in einem Drahtlosrelaiskommunikationssystem für die Endgerätevorrichtung ist und die zweite Funkzugangsnetzvorrichtung (900, 1100) ein Elternknoten der ersten Funkzugangsnetzvorrichtung (800, 1000) oder eine Geberbasisstation der ersten Funkzugangsnetzvorrichtung (800, 1000) in dem Drahtlosrelaiskommunikationssystem ist,
wobei das Verfahren ferner Folgendes umfasst:
Empfangen, durch die erste Funkzugangsnetzvorrichtung (800, 1000), einer zweiten Nachricht von der zweiten Funkzugangsnetzvorrichtung (900, 1100), wobei die zweite Nachricht eine Meldungsweise und/oder mindestens eine Meldungsgranularität umfasst.

2. Verfahren nach Anspruch 1, wobei die Meldungsweise umfasst, dass ein Downlink-Pufferbelegungsverhältnis größer als eine vorgegebene Schwelle ist oder eine verbleibende Downlink-Puffergröße kleiner als eine vorgegebene Schwelle ist; wobei das Senden, durch die erste Funkzugangsnetzvorrichtung (800, 1000), der ersten Nachricht an die zweite Funkzugangsnetzvorrichtung (900, 1100) Folgendes umfasst: Senden, durch die erste Funkzugangsnetzvorrichtung (800, 1000), der ersten Nachricht an die zweite Funkzugangsnetzvorrichtung (900, 1100), wenn das Downlink-Pufferbelegungsverhältnis größer als die vorgegebene Schwelle ist oder wenn die verbleibende Downlink-Puffergröße kleiner als die vorgegebene Schwelle ist.

3. Verfahren nach Anspruch 1 oder 2, wobei das Erzeugen, durch die erste Funkzugangsnetzvorrichtung (800, 1000), der ersten Nachricht Folgendes umfasst: Erzeugen, durch die erste Funkzugangsnetzvorrichtung (800, 1000), der ersten Nachricht basierend auf der Meldungsgranularität.

4. Kommunikationssteuerverfahren, das Folgendes umfasst:
Empfangen, durch eine zweite Funkzugangsnetzvorrichtung (900, 1100), einer ersten Nachricht von einer ersten Funkzugangsnetzvorrichtung (800, 1000), wobei die erste Nachricht eine Kennung einer Funkzugangsnetzvorrichtung, auf die eine Endgerätevorrichtung zugreift, und Downlink-Statusinformationen, die der Kennung der Funkzugangsnetzvorrichtung, auf die die Endgerätevorrichtung zugreift, entsprechen, umfasst, wobei
die erste Funkzugangsnetzvorrichtung (800, 1000), ein Relaisknoten in einem Drahtlosrelaiskommunikationssystem für die Endgerätevorrichtung ist und die zweite Funkzugangsnetzvorrichtung (900, 1100) ein Elternknoten der ersten Funkzugangsnetzvorrichtung (800, 1000) oder eine Geberbasisstation der ersten Funkzugangsnetzvorrichtung (800, 1000) in dem Drahtlosrelaiskommunikationssystem ist,
wobei das Verfahren ferner Folgendes umfasst:
Senden, durch die zweite Funkzugangsnetzvorrichtung (900, 1100), einer zweiten Nachricht an die erste Funkzugangsnetzvorrichtung (800, 1000), wobei die zweite Nachricht eine Meldungsweise und/oder mindestens eine Meldungsgranularität umfasst.

5. Verfahren nach Anspruch 4, wobei die Meldungsweise umfasst, dass ein Downlink-Pufferbelegungsverhältnis größer als eine vorgegebene Schwelle ist oder eine verbleibende Downlink-Puffergröße kleiner als eine vorgegebene Schwelle ist.

6. Verfahren nach einem der Ansprüche 1 bis 5, wobei die erste Nachricht ferner Folgendes umfasst:
eine Kennung eines Funklinksteuerungs- bzw. RLC-"Backhaul"-Kanals und Downlink-Statusinformationen, die der Kennung des RLC-Backhaul-Kanals entsprechen.

7. Verfahren nach einem der Ansprüche 1 bis 6, wobei die Downlink-Statusinformationen mindestens einen Statuswert umfassen;
der Statuswert eines der Folgenden ist: eine verbleibende Downlink-Puffergröße, ein Downlink-Pufferbelegungsverhältnis, eine erwartete Downlink-Übertragungsrate, ein Überlastungsgrad und eine Downlink-Puffergrößenkombination.

8. Verfahren nach einem der Ansprüche 1 bis 7, wobei die erste Nachricht eine Adaptionsschichtnachricht ist.

9. Verfahren nach einem der Ansprüche 1 bis 8, wobei, wenn die zweite Funkzugangsnetzvorrichtung (900, 1100) die Geberbasisstation ist, die erste Nachricht eines der Folgenden ist: eine Funkressourcensteuerungs- bzw. RRC-Nachricht, eine F1-Schnittstellennachricht und eine Adaptionsschichtnachricht.

10. Verfahren nach einem der Ansprüche 1 bis 9, wobei die Funkzugriffsnetzvorrichtung, auf die die Endgerätvorrichtung zugreift, ein "Integrated-Access-and-Backhaul"- bzw. IAB-Knoten ist;
wobei die Kennung der Funkzugriffsnetzvorrichtung, auf die die Endgerätevorrichtung zugreift, eine Kennung ist, die durch eine zentralisierte Einheit bzw. CU für eine Adaptionsschicht des IAB-Knotens zugewiesen wird.

11. Kommunikationseinrichtung, umfassend Module zum Ausführen von Schritten des Verfahrens nach einem der Ansprüche 1 bis 3 und Ansprüche 6 bis 10.

12. Kommunikationseinrichtung, umfassend Module zum Ausführen von Schritten des Verfahrens nach einem der Ansprüche 4 bis 10.

13. Kommunikationssystem, dass die Kommunikationseinrichtung nach Anspruch 11 und die Kommunikationseinrichtung nach Anspruch 12 umfasst.

14. Computerprogrammprodukt, das einen Computerprogrammcode umfasst, der bei Ausführung durch einen Prozessor einer Einrichtung bewirkt, dass die Einrichtung die Schritte des Verfahrens nach einem der Ansprüche 1 bis 10 ausführt.

15. Computerlesbares Speichermedium, das das Computerprogrammprodukt nach Anspruch 14 umfasst.

## Revendications

1. Procédé de commande de communication, comprenant :
la génération, par un premier dispositif de réseau d'accès radio (800, 1000), d'un premier message ; et
l'envoi, par le premier dispositif de réseau d'accès radio (800, 1000), du premier message à un deuxième dispositif de réseau d'accès radio (900, 1100), le premier message comprenant un identifiant d'un dispositif de réseau d'accès radio auquel accède un dispositif terminal et des informations d'état de liaison descendante correspondant à l'identifiant du dispositif de réseau d'accès radio auquel accède le dispositif terminal,
le premier dispositif de réseau d'accès radio (800, 1000) étant un noeud de relais dans un système de communications de relais sans fil pour le dispositif terminal, et le deuxième dispositif de réseau d'accès radio (900, 1100) étant un noeud parent du premier dispositif de réseau d'accès radio (800, 1000) ou une station de base donneuse du premier dispositif de réseau d'accès radio (800, 1000) dans le système de communications de relais sans fil,
le procédé comprenant en outre :
la réception, par le premier dispositif de réseau d'accès radio (800, 1000), d'un deuxième message depuis le deuxième dispositif de réseau d'accès radio (900, 1100), le deuxième message comprenant un mode de rapport et/ou au moins une granularité de rapport.

2. Procédé selon la revendication 1, le mode de rapport comprenant le fait qu'un taux d'occupation de tampon de liaison descendante est supérieur à un seuil prédéfini ou qu'une taille de tampon de liaison descendante restante est inférieure à un seuil prédéfini ;
l'envoi, par le premier dispositif de réseau d'accès radio (800, 1000), du premier message au deuxième dispositif de réseau d'accès radio (900, 1100) comprenant :
l'envoi, par le premier dispositif de réseau d'accès radio (800, 1000), du premier message au deuxième dispositif de réseau d'accès radio (900, 1100) lorsque le taux d'occupation de tampon de liaison descendante est supérieur au seuil prédéfini ou lorsque la taille de tampon de liaison descendante restante est inférieure au seuil prédéfini.

3. Procédé selon la revendication 1 ou 2, la génération, par le premier dispositif de réseau d'accès radio (800, 1000), du premier message comprenant :
la génération, par le premier dispositif de réseau d'accès radio (800, 1000), du premier message sur la base de la granularité de rapport.

4. Procédé de commande de communication, comprenant :
la réception, par un deuxième dispositif de réseau d'accès radio (900, 1100), d'un premier message depuis un premier dispositif de réseau d'accès radio (800, 1000), le premier message comprenant un identifiant d'un dispositif de réseau d'accès radio auquel accède un dispositif terminal et des informations d'état de liaison descendante correspondant à l'identifiant du dispositif de réseau d'accès radio auquel accède le dispositif terminal,
le premier dispositif de réseau d'accès radio (800, 1000) étant un noeud de relais dans un système de communications de relais sans fil pour le dispositif terminal, et le deuxième dispositif de réseau d'accès radio (900, 1100) étant un noeud parent du premier dispositif de réseau d'accès radio (800, 1000) ou une station de base donneuse du premier dispositif de réseau d'accès radio (800, 1000) dans le système de communications de relais sans fil,
le procédé comprenant en outre :
l'envoi, par le deuxième dispositif de réseau d'accès radio (900, 1100), d'un deuxième message au premier dispositif de réseau d'accès radio (800, 1000), le deuxième message comprenant un mode de rapport et/ou au moins une granularité de rapport.

5. Procédé selon la revendication 4, le mode de rapport comprenant le fait qu'un taux d'occupation de tampon de liaison descendante est supérieur à un seuil prédéfini ou qu'une taille de tampon de liaison descendante restante est inférieure à un seuil prédéfini.

6. Procédé selon l'une quelconque des revendications 1 à 5, le premier message comprenant en outre :
un identifiant d'un canal backhaul de commande des liaisons radio, RLC, et des informations d'état de liaison descendante correspondant à l'identifiant du canal backhaul RLC.

7. Procédé selon l'une quelconque des revendications 1 à 6, les informations d'état de liaison descendante comprenant au moins une valeur d'état ;
la valeur d'état étant l'une quelconque des valeurs suivantes : une taille de tampon de liaison descendante restante, un taux d'occupation de tampon de liaison descendante, un débit de transmission de liaison descendante attendu, un niveau de congestion, et une combinaison de tailles de tampon de liaison descendante.

8. Procédé selon l'une quelconque des revendications 1 à 7, le premier message étant un message de couche d'adaptation.

9. Procédé selon l'une quelconque des revendications 1 à 8, lorsque le deuxième dispositif de réseau d'accès radio (900, 1100) est la station de base donneuse, le premier message est l'un quelconque des messages suivants : un message de commande des ressources radio, RRC, un message d'interface F1 et un message de couche d'adaptation.

10. Procédé selon l'une quelconque des revendications 1 à 9, le dispositif de réseau d'accès radio auquel accède le dispositif terminal étant un noeud d'accès et de backhaul intégrés, IAB ;
l'identifiant du dispositif de réseau d'accès radio auquel accède le dispositif terminal étant un identifiant alloué par une unité centralisée, CU, pour une couche d'adaptation du noeud IAB.

11. Appareil de communication, comprenant des modules de mise en oeuvre d'étapes du procédé selon l'une quelconque des revendications 1 à 3 et des revendications 6 à 10.

12. Appareil de communication, comprenant des modules de mise en oeuvre d'étapes du procédé selon l'une quelconque des revendications 4 à 10.

13. Système de communication, comprenant l'appareil de communication selon la revendication 11 et l'appareil de communication selon la revendication 12.

14. Produit-programme d'ordinateur, comprenant un code de programme d'ordinateur qui, lorsqu'il est exécuté par un processeur d'un appareil, amène l'appareil à mettre en oeuvre les étapes du procédé selon l'une quelconque des revendications 1 à 10.

15. Support de stockage lisible par ordinateur comprenant le produit-programme d'ordinateur selon la revendication 14.
